(19) Europäisches Patentamt
European Patent Office
Office européen des brevets

(11) EP 4 723 521 A1

(12) EUROPEAN PATENT APPLICATION
published in accordance with Art. 153(4) EPC

(43) Date of publication:
08.04.2026 Bulletin 2026/15

(21) Application number: 24838625.2

(22) Date of filing: 28.06.2024

(51) International Patent Classification (IPC):
H04L 1/00 (2006.01)    H04L 5/00 (2006.01)

(52) Cooperative Patent Classification (CPC):
H04L 1/00; H04L 5/00

(86) International application number:
PCT/CN2024/102616

(87) International publication number:
WO 2025/011370 (16.01.2025 Gazette 2025/03)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 10.07.2023 CN 202310844462

(71) Applicant: Huawei Technologies Co., Ltd.
Shenzhen, Guangdong 518129 (CN)

(72) Inventors:
• QU, Weilin
  Shenzhen, Guangdong 518129 (CN)
• WU, Yiling
  Shenzhen, Guangdong 518129 (CN)
• LUO, Zhihu
  Shenzhen, Guangdong 518129 (CN)
• JIN, Zhe
  Shenzhen, Guangdong 518129 (CN)

(74) Representative: Pfenning, Meinig & Partner mbB
Patent- und Rechtsanwälte
Theresienhöhe 11a
80339 München (DE)

(54) COMMUNICATION METHODS AND APPARATUS

(57) Embodiments of this application relate to the communication field, and provide a communication method and apparatus, to implement low-complexity channel encoding by a terminal device. The communication method includes: A terminal device receives first information, where the first information indicates the terminal device to send an uplink signal, and an input bit sequence of the uplink signal is a first bit sequence; and outputs a prestored second bit sequence, where the second bit sequence is obtained by arranging, in a predefined order, a bit sequence obtained through channel encoding performed on the first bit sequence.

| Terminal device | | Network device |
|---|---|---|

S801: First information, where the first information indicates the terminal device to send an uplink signal, and an input bit sequence of the uplink signal is a first bit sequence

S802: Prestored second bit sequence, where the second bit sequence is obtained by arranging, in a predefined order, a bit sequence obtained through channel encoding performed on the first bit sequence

FIG. 8

EP 4 723 521 A1

**Description**

This application claims priority to Chinese Patent Application No. 202310844462.0, filed with the China National Intellectual Property Administration on July 10, 2023 and entitled "COMMUNICATION METHOD AND APPARATUS", which is incorporated herein by reference in its entirety.

**TECHNICAL FIELD**

Embodiments of this application relate to the communication field, and in particular, to a communication method and apparatus.

**BACKGROUND**

With wide application of machine type communication (machine type communication, MTC) and internet of things (Internet of things, IoT) communication in 5th generation (5th generation, 5G) new radio (new radio, NR) communication, more IoT devices are connected in a network. Therefore, costs and power consumption requirements of the IoT devices need to be taken into account.

To meet these requirements, an ambient (Ambient) IoT system is introduced into 3rd generation partnership project (3rd generation partnership project, 3GPP) Release 18 (Release 18, R18). In the ambient IoT system, a device has a limited energy storage capability, or a device has no energy storage capability at all, that is, the device has no power supply device or no power supply circuit inside. Signal transmission is implemented by obtaining energy from an environment and performing backscattering and other operations. Compared with a conventional IoT device, the device based on the ambient IoT system is greatly reduced in costs and power consumption because of a lack of an energy storage capability or a limited energy storage capability.

However, when the power consumption and the costs of the device are reduced, processing complexity of this type of device is also reduced accordingly. As a result, this type of device cannot process complex channel encoding operations.

**SUMMARY**

Embodiments of this application provide a communication method and apparatus, to implement low-complexity channel encoding by a terminal device.

According to a first aspect, a communication method is provided. The method may be performed by a terminal device; may be performed by a component of the terminal device, for example, a processor, a chip, or a chip system of the terminal device; or may be implemented by a logical module or software that can implement all or some functions of the terminal device. The method includes: receiving first information, where the first information indicates the terminal device to send an uplink signal, and an input bit sequence of the uplink signal is a first bit sequence; and outputting a prestored second bit sequence, where the second bit sequence is obtained by arranging, in a predefined order, a bit sequence obtained through channel encoding performed on the first bit sequence.

According to this solution, the second bit sequence output by the terminal device is obtained by arranging, in the predefined order, the bit sequence obtained through the encoding performed on the first bit sequence, and the first bit sequence is the input bit sequence of the uplink signal. A process of obtaining the second bit sequence by arranging, in the predefined order, the bit sequence obtained through the encoding performed on the first bit sequence may be represented as re-arranging a bit sequence output by an encoder, to reduce a temporal correlation between adjacent bits in channel transmission and improve data transmission reliability.

In addition, because the second bit sequence output by the terminal device can be used to reduce the temporal correlation between the adjacent bits in channel transmission and improve data transmission reliability, same effect as a rate matching step (for example, padding, interleaving, or puncturing) can be achieved (same encoding effect as encoded bit interleaving is achieved, that is, the temporal correlation between the adjacent bits in channel transmission is reduced and data transmission reliability is improved) without a need to perform the rate matching step. This reduces processing complexity of the terminal device. Moreover, because the second bit sequence is prestored, the terminal device does not need to perform encoding, arranging in the predefined order, and other steps after receiving the first information, but directly extracts the second bit sequence from stored information and sends the second bit sequence to a network device. This further reduces complexity of channel encoding.

According to a second aspect, a communication method is provided. The method may be performed by a terminal device; may be performed by a component of the terminal device, for example, a processor, a chip, or a chip system of the terminal device; or may be implemented by a logical module or software that can implement all or some functions of the terminal device. The method includes: receiving first information, where the first information indicates the terminal device to send an uplink signal, and an input bit sequence of the uplink signal is a first bit sequence; and outputting a prestored third bit sequence in a predefined order, where the third bit sequence is obtained by performing channel encoding on the first bit sequence.

According to this solution, the third bit sequence output by the terminal device in the predefined order is obtained by encoding the first bit sequence, and the first bit sequence is the input bit sequence of the uplink signal. A process of outputting the third bit sequence in the predefined order may be represented as re-arranging a bit sequence output by an encoder, to reduce a temporal correlation between adjacent bits in channel transmission and improve data transmission reliability.

In addition, because the third bit sequence output by the terminal device in the predefined order can be used to reduce the temporal correlation between the adjacent bits in channel transmission and improve data transmission reliability, same effect as a rate matching step (for example, padding, interleaving, or puncturing) can be achieved (same encoding effect as encoded bit interleaving is achieved, that is, the temporal correlation between the adjacent bits in channel transmission is reduced and data transmission reliability is improved) without a need to perform the rate matching step. This reduces complexity of channel encoding. Moreover, because the third bit sequence is prestored, the terminal device does not need to perform an encoding step after receiving the first information, but directly extracts the third bit sequence from stored information. This further reduces the complexity of channel encoding.

With reference to the first aspect and the second aspect, in a possible design, the predefined order includes an output order of an interleaving matrix when the encoded bit sequence is input into the interleaving matrix.

According to this possible design, the terminal device may arrange the encoded bit sequence in the output order of the interleaving matrix, to obtain the second bit sequence. An objective of inputting the third bit sequence (that is, a bit sequence obtained by encoding the input bit sequence of the uplink signal) into the interleaving matrix is to re-arrange the third bit sequence, to reduce the temporal correlation between the adjacent bits in the third bit sequence in channel transmission and improve data transmission reliability. Therefore, the temporal correlation that is between adjacent bits in the second bit sequence arranged in the output order of the interleaving matrix and that is in channel transmission is less than a temporal correlation between adjacent bits in the first bit sequence in channel transmission. In this way, compared with directly outputting, by the terminal device, the bit sequence (namely, the third bit sequence) obtained by encoding the first bit sequence, outputting the second bit sequence by the terminal device can improve data transmission reliability.

With reference to the first aspect and the second aspect, in a possible design, a quantity of bits in the encoded bit sequence is equal to a product of a quantity of rows of the interleaving matrix and a quantity of columns of the interleaving matrix.

With reference to the first aspect and the second aspect, in a possible design, the communication method further includes: receiving second information, where the second information indicates or configures the quantity of rows of the interleaving matrix and/or the quantity of columns of the interleaving matrix.

According to this possible design, a quantity of bits in the third bit sequence needs to be equal to the product of the quantity of rows of the interleaving matrix and the quantity of columns of the interleaving matrix. Therefore, when the second information indicates the quantity of rows of the interleaving matrix or the quantity of columns of the interleaving matrix, that is, when the network device does not explicitly indicate the interleaving matrix corresponding to the third bit sequence, the terminal device may determine the quantity of columns of the interleaving matrix or the quantity of rows of the interleaving matrix based on the second information and the quantity of bits in the third bit sequence, to determine the interleaving matrix corresponding to the third bit sequence; and then determine the output order of the interleaving matrix when the third bit sequence is input into the interleaving matrix, that is, determine the predefined order.

According to a third aspect, a communication method is provided. The method may be performed by a terminal device; may be performed by a component of the terminal device, for example, a processor, a chip, or a chip system of the terminal device; or may be implemented by a logical module or software that can implement all or some functions of the terminal device. The method includes: receiving third information, where the third information indicates or configures a transport block size TBS value, and the TBS value is equal to a product of a quantity of rows of an interleaving matrix and a quantity of columns of the interleaving matrix; determining a third bit sequence, where the third bit sequence is obtained by performing channel encoding on an input bit sequence of an uplink signal, and a quantity of bits in the third bit sequence is equal to the TBS value; and outputting an interleaved third bit sequence.

According to this solution, the quantity of bits (that is, the TBS value) in the third bit sequence is equal to the product of the quantity of rows of the interleaving matrix and the quantity of columns of the interleaving matrix. Therefore, the terminal device does not need to perform a padding operation on the third bit sequence in a process of inputting the third bit sequence into the interleaving matrix, and does not need to perform a puncturing operation on the interleaved third bit sequence after the interleaved third bit sequence is output from the interleaving matrix. This reduces complexity of channel encoding.

In a possible design, before the receiving the third information, the communication method further includes: receiving second information, where the second information indicates or configures the quantity of rows of the interleaving matrix and/or the quantity of columns of the interleaving matrix.

In a possible design, before the receiving the third information, the communication method further includes: receiving fourth information, where the fourth information indicates or configures a TBS value set, and values in the TBS value set include the TBS value.

In a possible design, when the second information indicates or configures the quantity of rows of the interleaving matrix or the quantity of columns of the interleaving matrix, each value in the TBS value set is an integer multiple of the quantity of rows of the interleaving matrix, or each value in the TBS value set is an integer multiple of the quantity of columns of the interleaving matrix.

According to this possible design, when the second information indicates or configures the quantity of rows of the interleaving matrix, each value in the TBS value set is the integer multiple of the quantity of rows of the interleaving matrix; or when the second information indicates or configures the quantity of columns of the interleaving matrix, each value in the TBS value set is the integer multiple of the quantity of columns of the interleaving matrix. In addition, the TBS value is a value in the TBS value set. Therefore, the terminal device can determine, based on the third information and the second information, the quantity of columns of the interleaving matrix and the quantity of rows of the interleaving matrix corresponding to the third bit sequence. In this way, the terminal device does not need to perform the padding operation on the third bit sequence in the process of inputting the third bit sequence into the interleaving matrix, and does not need to perform the puncturing operation on the interleaved third bit sequence after the interleaved third bit sequence is output from the interleaving matrix. This reduces complexity of channel encoding.

In a possible design, before the receiving the fourth information, the communication method further includes: sending fifth information, where the fifth information is associated with a maximum value in the TBS value set, the fifth information includes a type of the terminal device and/or a capability level of the terminal device, the type of the terminal device includes at least one of a terminal type capable of actively generating an uplink carrier and a terminal type capable of reflecting a downlink carrier to send an uplink signal, and the capability level of the terminal device includes at least one of a memory storage level, an energy storage level, and a power consumption level.

In a possible design, the fifth information may be further used to determine the quantity of rows of the interleaving matrix or a maximum value of the quantity of rows.

According to a fourth aspect, a communication method is provided. The method may be performed by a network device; may be performed by a component of the network device, for example, a processor, a chip, or a chip system of the network device; or may be implemented by a logical module or software that can implement all or some functions of the network device. The method includes: determining third information, where the third information indicates a transport block size TBS value, and the TBS value is equal to a product of a quantity of rows of an interleaving matrix and a quantity of columns of the interleaving matrix; and sending the third information.

According to this solution, the network device may configure, for a terminal device, the TBS value to be equal to the product of the quantity of rows of the interleaving matrix and the quantity of columns of the interleaving matrix, so that the terminal device can determine a quantity of bits (that is, the quantity of bits in the third bit sequence is equal to the TBS value) in a third bit sequence (that is, a bit sequence obtained by encoding an input bit sequence of an uplink signal) based on the TBS value. In this way, the terminal device does not need to perform a padding operation on the third bit sequence in a process of inputting the third bit sequence into the interleaving matrix, and does not need to perform a puncturing operation on an interleaved third bit sequence after the interleaved third bit sequence is output from the interleaving matrix. This reduces complexity of channel encoding.

In a possible design, the communication method further includes: sending second information, where the second information indicates the quantity of rows of the interleaving matrix and/or the quantity of columns of the interleaving matrix.

In a possible design, the communication method further includes: determining a TBS value set, where the TBS value set is an integer multiple of the quantity of rows of the interleaving matrix or an integer multiple of the quantity of columns of the interleaving matrix; and determining the TBS value from the TBS value set.

In a possible design, before the sending the third information, the communication method further includes: sending fourth information, where the fourth information indicates the TBS value set.

In a possible design, the communication method further includes: receiving fifth information, where the fifth information is associated with a maximum value in the TBS value set, the fifth information includes a type of a terminal device and/or a capability level of the terminal device, the type of the terminal device includes at least one of a terminal type capable of actively generating an uplink carrier and a terminal type capable of reflecting a downlink carrier to send an uplink signal, and the capability level of the terminal device includes at least one of a memory storage level, an energy storage level, and a power consumption level.

In a possible design, the maximum value in the TBS value set is positively correlated with the capability level.

In a possible design, a maximum value in the TBS value set when the terminal device has a capability of active carrier sending is greater than a maximum value in the TBS value set when the terminal device does not have a capability of active carrier sending.

According to this possible design, a higher capability level indicates a larger maximum value in the TBS value set, the maximum value in the TBS value set when the terminal device has the capability of active carrier sending is greater than the maximum value in the TBS value set when the terminal device does not have the capability of active carrier sending, the TBS value is a value in the TBS value set, and the maximum value in the TBS value set is a value of a maximum TBS that can be transmitted by the terminal device. Therefore, when the third information indicates the maximum value in the TBS value set as the TBS value, performance of the terminal device is maximized.

In a possible design, a value of the quantity of rows of the interleaving matrix or a maximum value of the quantity of rows is associated with the fifth information.

In a possible design, the quantity of rows of the interleaving matrix or the maximum value of the quantity of rows is positively correlated with the capability level.

In a possible design, a quantity of rows of the interleaving matrix or a maximum value of the quantity of rows when the type of the terminal device is the terminal type capable of actively generating an uplink carrier is greater than a quantity of rows of the interleaving matrix or a maximum value of the quantity of rows when the type of the terminal device is the terminal type capable of reflecting a downlink carrier to send an uplink signal.

According to this possible design, a higher capability level indicates a larger quantity of rows of the interleaving matrix or a larger maximum value of the quantity of rows, and the quantity of rows of the interleaving matrix or the maximum value of the quantity of rows when the type of the terminal device is the terminal type capable of actively generating an uplink carrier is greater than the quantity of rows of the interleaving matrix or the maximum value of the quantity of rows when the type of the terminal device is the terminal type capable of reflecting a downlink carrier to send an uplink signal. In other words, a higher reporting capability of the terminal device indicates a larger quantity of rows of the interleaving matrix or a larger maximum value of the quantity of rows configured by the network device for the terminal device. Therefore, a larger interleaving distance of the third bit sequence (that is, a lower temporal correlation between adjacent bits in channel transmission) leads to better data transmission performance. For technical effects brought by any possible design of the fourth aspect, refer to the technical effects brought by a corresponding design of the third aspect. Details are not described herein again.

According to a fifth aspect, a communication apparatus is provided to implement various methods. The communication apparatus may be the terminal device in any one of the first aspect, the second aspect, and the third aspect, or an apparatus included in the terminal device, for example, a chip or a chip system; or the communication apparatus may be the network device in the fourth aspect, or an apparatus included in the network device, for example, a chip or a chip system. The communication apparatus includes a corresponding module, unit, or means (means) for implementing a method. The module, unit, or means may be implemented by using hardware or software, or may be implemented by hardware executing corresponding software. The hardware or the software includes one or more modules or units corresponding to functions.

In some possible designs, the communication apparatus may include a processing module and a transceiver module. The processing module may be configured to implement a processing function in any one of the foregoing aspects or the possible implementations of the foregoing aspects. The transceiver module may include a receiving module and a sending module that are respectively configured to implement a receiving function and a sending function in any one of the foregoing aspects or the possible implementations of the foregoing aspects.

In some possible designs, the transceiver module may include a transceiver circuit, a transceiver device, a transceiver, or a communication interface.

According to a sixth aspect, a communication apparatus is provided, including a processor and a memory. The memory is configured to store computer instructions. When the processor executes the instructions, the communication apparatus is enabled to perform the method in any one of the aspects. The communication apparatus may be the terminal device in any one of the first aspect, the second aspect, and the third aspect, or an apparatus included in the terminal device, for example, a chip or a chip system; or the communication apparatus may be the network device in the fourth aspect, or an apparatus included in the network device, for example, a chip or a chip system.

According to a seventh aspect, a communication apparatus is provided, including a processor and a communication interface. The communication interface is configured to communicate with a module outside the communication apparatus. The processor is configured to execute a computer program or instructions, so that the communication apparatus performs the method in any one of the aspects. The communication apparatus may be the terminal device in any one of the first aspect, the second aspect, and the third aspect, or an apparatus included in the terminal device, for example, a chip or a chip system; or the communication apparatus may be the network device in the fourth aspect, or an apparatus included in the network device, for example, a chip or a chip system.

According to an eighth aspect, a communication apparatus is provided, including at least one processor. The processor is configured to execute a computer program or instructions stored in a memory, so that the communication apparatus performs the method in any one of the aspects. The memory may be coupled to the processor, or may be independent of the processor. The communication apparatus may be the terminal device in any one of the first aspect, the second aspect, and the third aspect, or an apparatus included in the terminal device, for example, a chip or a chip system; or the communication apparatus may be the network device in the fourth aspect, or an apparatus included in the network device, for example, a chip or a chip system.

In some possible designs, the communication apparatus includes the memory. The memory is configured to store necessary program instructions and data.

In some possible designs, when the apparatus is a chip system, the apparatus may include a chip, or may include a chip and another discrete device.

It can be understood that when the communication apparatus provided in any one of the fifth aspect to the eighth aspect is a chip, the sending action/function of the communication apparatus can be understood as outputting information, and the receiving action/function of the communication apparatus can be understood as inputting information.

According to a ninth aspect, a computer-readable storage medium is provided. The computer-readable storage medium stores a computer program or instructions. When the computer program or instructions are run on a communication apparatus, the communication apparatus is enabled to perform the method in any one of the aspects.

According to a tenth aspect, a computer program product including instructions is provided. When the computer program product runs on a communication apparatus, the communication apparatus is enabled to perform the method in any one of the aspects.

According to an eleventh aspect, a chip is provided, including a processor. The processor is coupled to a memory. The memory is configured to store a program or instructions. When the program or instructions are executed by the processor, the chip is enabled to perform the method according to any one of the aspects.

According to a twelfth aspect, a system is provided, including the terminal device provided in any one of the fifth aspect to the eighth aspect or the apparatus included in the terminal device, and the network device provided in any one of the fifth aspect to the eighth aspect or the apparatus included in the network device.

For technical effects brought by any one of the design manners of the fifth aspect to the twelfth aspect, refer to the technical effects brought by different design manners of the first aspect, the second aspect, the third aspect, or the fourth aspect. Details are not described herein again.

## BRIEF DESCRIPTION OF DRAWINGS

FIG. 1 is a diagram of an encoder according to this application;
FIG. 2 is a diagram of an interleaving matrix according to this application;
FIG. 3 is a schematic flowchart of an interleaving method according to this application;
FIG. 4 is a diagram of another interleaving matrix according to this application;
FIG. 5 is a schematic flowchart of another interleaving method according to this application;
FIG. 6 is a schematic flowchart of a rate matching method according to this application;
FIG. 7 is a diagram of an architecture of a mobile communication system to which an embodiment of this application is applied;
FIG. 8 is a schematic flowchart of a communication method according to this application;
FIG. 9 is a schematic flowchart of another communication method according to this application;
FIG. 10 is a schematic flowchart of still another communication method according to this application;
FIG. 11 is a schematic flowchart of yet another communication method according to this application;
FIG. 12 is a diagram of a structure of a communication apparatus according to this application;
FIG. 13 is a diagram of a structure of another communication apparatus according to this application; and
FIG. 14 is a diagram of a structure of still another communication apparatus according to this application.

## DESCRIPTION OF EMBODIMENTS

In descriptions of this application, unless otherwise specified, "/" represents an "or" relationship between associated objects. For example, A/B may represent A or B. In this application, "and/or" describes only an association relationship for describing associated objects, and represents that three relationships may exist. For example, A and/or B may represent the following three cases: Only A exists, both A and B exist, and only B exists. A and B each may be in a singular or plural form.

In the descriptions of this application, unless otherwise specified, "a plurality of" means two or more. "At least one of the following items (pieces)" or a similar expression thereof means any combination of these items, including a singular item (piece) or any combination of plural items (pieces). For example, at least one item (piece) of a, b, or c may represent a, b, c, a-b, a-c, b-c, or a-b-c, where a, b, and c each may be in a singular or plural form.

In addition, for ease of clear description of technical solutions in embodiments of this application, terms such as "first" and "second" are used in embodiments of this application to distinguish between same items having a basically same function and effect or similar items. A person skilled in the art can understand that the terms such as "first" and "second" are not used to limit a quantity or an execution sequence, and that the terms such as "first" and "second" do not indicate a definite difference.

In embodiments of this application, a term "example", "for example", or the like is used to represent giving an example, an illustration, or a description. Any embodiment or design scheme described as "example" or "for example" in embodiments of this application should not be construed as being preferred or having more advantages over other embodiments or design schemes. Exactly, use of the term "example", "for example", or the like is intended to present a related concept in a specific manner for ease of understanding.

It can be understood that "embodiments" mentioned throughout this specification means that particular features, structures, or characteristics related to embodiments are included in at least one embodiment of this application. Therefore, embodiments in the entire specification are unnecessarily a same embodiment. Moreover, these particular features, structure, or characteristics may be combined in one or more embodiments in any appropriate manner. It can be understood that sequence numbers of processes do not mean execution sequences in various embodiments of this application. The execution sequences of the processes should be determined based on functions and internal logic of the processes, and should not be construed as any limitation on implementation processes of embodiments of this application.

It can be understood that in this application, both "when ..." and "if" mean that corresponding processing is performed in an objective situation, are not intended to limit time, do not require a determining action during implementation, and do not mean that there are other limitations.

It can be understood that in some scenarios, some optional features in embodiments of this application may be independently implemented without depending on other features, for example, a solution on which the optional features are currently based, to resolve a corresponding technical problem and achieve corresponding effects. Alternatively, in some scenarios, the optional features may be combined with other features depending on requirements. Correspondingly, apparatuses provided in embodiments of this application may also correspondingly implement these features or functions. Details are not described herein.

In this application, unless otherwise specified, for same or similar parts in embodiments, refer to each other. In embodiments of this application and implementations/methods/implementation methods in embodiments, unless otherwise specified or a logical conflict occurs, terms and/or descriptions are consistent and may be mutually referenced between different embodiments and between implementations/methods/implementation methods in embodiments. Technical features in different embodiments and implementations/methods/implementation methods in embodiments may be combined to form a new embodiment, implementation, method, or implementation method based on an internal logical relationship thereof. The following implementations of this application are not intended to limit the protection scope of this application.

For ease of understanding the technical solutions in embodiments of this application, the following first briefly describes technologies related to this application.

1. Convolutional coding (convolutional coding, CC):

CC is error control coding, and can effectively resist impact of channel noise. In a CC process, a size of encoded data output by an encoder is determined based on a bit rate of the encoder.

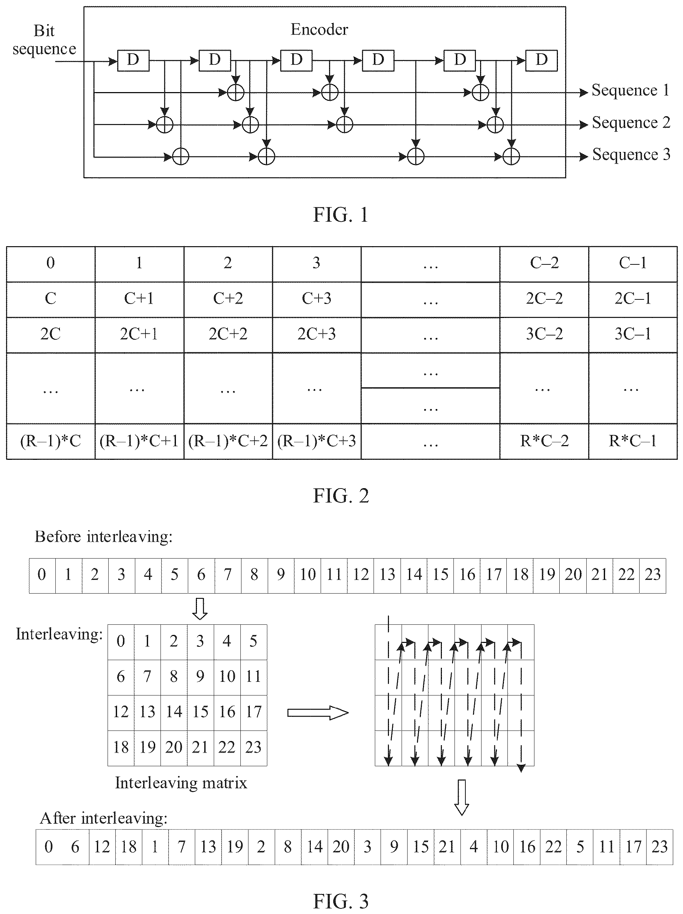

For example, there are six registers in an encoder, a bit rate is 1/3 bit/second (bit per second, bit/s or bps), and a size of uplink data is 10 bits. As shown in FIG. 1, D in FIG. 1 represents a register. After a 10-bit input bit sequence of an uplink signal is input into the encoder, three sequences (a sequence 1, a sequence 2, and a sequence 3 shown in FIG. 1) whose lengths are all 10 bits are correspondingly generated. In other words, the 10-bit input bit sequence is encoded to generate 30-bit data.

CC includes tail biting convolutional coding (tail biting convolutional coding, TBCC), and TBCC is applied to a long term evolution (long term evolution, LTE) system. In a TBCC process, initial statuses of registers are last N bits in an input bit sequence of an uplink signal before encoding. When one bit is input into an encoder, the encoder performs encoding based on the current initial statuses of the registers and then outputs an encoded bit, and updates the initial statuses of the registers to last N bits in an updated bit sequence obtained by shifting rightward the input bit sequence before encoding by one bit. When a new bit is input into the encoder, the encoder performs encoding based on the updated initial statuses of the registers. N is a quantity of registers. After a last bit in the bit sequence is encoded, the initial statuses of the registers are updated to the last N bits in the input bit sequence before encoding.

For example, when the input bit sequence is 10 bits long (for example, the 10-bit input bit sequence may be $c_0c_1c_2c_3c_4c_5c_6c_7c_8c_9$), an encoded bit sequence output by the encoder shown in FIG. 1 is used as an example. In this case, initial statuses of the registers are $c_4c_5c_6c_7c_8c_9$. When a first bit $c_0$ is input into the encoder, the encoder performs encoding based on the current initial statuses $c_4c_5c_6c_7c_8c_9$ of the registers, and outputs one bit $d_0$. In this case, the initial statuses of the registers in the encoder are updated to $c_5c_6c_7c_8c_9c_0$. When a second bit $c_1$ is input into the encoder, the encoder performs encoding based on the current initial statuses $c_5c_6c_7c_8c_9c_0$ of the registers, and outputs one bit $d_1$. In this case, the initial statuses of the registers in the encoder are updated to $c_6c_7c_8c_9c_0c_1$. By analogy, when a tenth bit $c_9$ is input into the encoder, the encoder performs encoding based on the current initial statuses $c_3c_4c_5c_6c_7c_8$ of the registers, and outputs one bit $d_9$. In this case, the initial statuses of the registers in the encoder are updated to $c_4c_5c_6c_7c_8c_9$. $d_0d_2d_3d_4d_5d_6d_7d_8d_9$ is an encoded bit sequence output by the encoder.

2. Interleaving technology:

The interleaving technology is introduced because errors occur in a form of a plurality of consecutive bits during data transmission. Interleaving can be understood as re-arranging a sequence output by an encoder, to reduce a temporal correlation between adjacent bits in channel transmission, and discretize errors. This improves an error correction capability (that is, decoding performance) of a receive end. In other words, data transmission reliability can be improved by using the interleaving technology. For each encoded bit sequence output by the encoder, a specific interleaving process may include the following two steps:

Step 1: A terminal side determines a to-be-interleaved sequence based on an encoded bit sequence output by the encoder, a quantity of rows (rows, Rs) of an interleaving matrix, and a quantity of columns (columns, Cs) of the interleaving matrix, where a quantity of bits in the to-be-interleaved sequence is equal to R*C.

For example, a quantity of bits in an encoded bit sequence is 28 bits, and R*C is equal to 32 bits. The terminal side pads the encoded bit sequence to obtain a 32-bit to-be-interleaved sequence. Optionally, values of four padding bits may be null (NULL) or 0.

Step 2: The terminal side inputs the to-be-interleaved sequence into the interleaving matrix and outputs an interleaved sequence from the interleaving matrix.

In an example, when no column permutation operation is performed on the interleaving matrix, the inputting the to-be-interleaved sequence into the interleaving matrix and outputting the interleaved sequence from the interleaving matrix includes: inputting, by the terminal side, the to-be-interleaved sequence into the interleaving matrix row by row based on the quantity R of rows and the quantity C of columns of the interleaving matrix, and outputting bits in the interleaving matrix column by column to obtain the interleaved sequence.

For example, the interleaving matrix is shown in FIG. 2. One rectangle represents one bit, and a numeral in a rectangle represents a number of a bit. In this case, the to-be-interleaved sequence is sequentially input into the interleaving matrix based on numbers in the sequence before interleaving. For example, the to-be-interleaved sequence includes 24 bits, numbers of the 24 bits are 0 to 23, the quantity of rows of an interleaving matrix is 4, and the quantity of columns of the interleaving matrix is 6. In this case, the interleaving matrix is shown in FIG. 3. After the 24 bits are input into the interleaving matrix, the bits are sequentially output in directions of dashed arrows, so that the interleaved bit sequence is shown in FIG. 3.

In another example, when a partial column permutation operation is performed on the interleaving matrix, the inputting the to-be-interleaved sequence into the interleaving matrix and outputting the interleaved sequence from the interleaving matrix includes: inputting, by the terminal side, the to-be-interleaved sequence into a first interleaving matrix row by row based on the quantity R of rows and the quantity C of columns of the interleaving matrix, performing column permutation on the first interleaving matrix based on a column permutation pattern to obtain a second interleaving matrix, and outputting bits in the second interleaving matrix column by column to obtain the interleaved sequence.

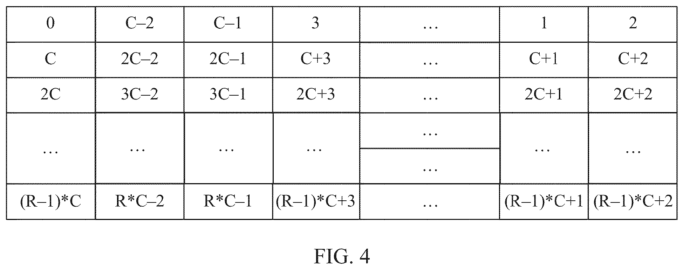

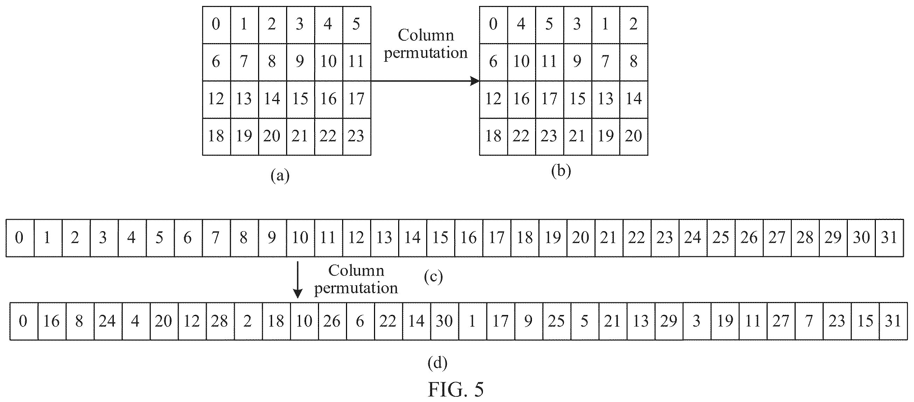

For example, the column permutation pattern is permutation between a second column and a $(C-1)^{th}$ column and permutation between a third column and a $C^{th}$ column, the first interleaving matrix is the interleaving matrix shown in FIG. 2. Because the column permutation pattern is permutation between the second column and the $(C-1)^{th}$ column and permutation between the third column and the $C^{th}$ column, the second interleaving matrix is shown in FIG. 4. For example, the to-be-interleaved sequence includes 24 bits, numbers of the 24 bits are 0 to 23, the quantity of rows of the interleaving matrix is 4, and the quantity of columns of the interleaving matrix is 6. In this case, the first interleaving matrix is shown in (a) in FIG. 5, and the second interleaving matrix is shown in (b) in FIG. 5.

Optionally, the column permutation pattern is predefined, for example, may be configured by a network side for the terminal side, or may be predefined in a protocol.

That the column permutation pattern is predefined in a protocol is used as an example. The permutation pattern for column permutation may include a column permutation pattern defined in Table 5.1.4-2 in 3rd Generation Partnership Project (3rd generation partnership project, 3GPP) TS36.212.

For example, the to-be-interleaved sequence includes 32 bits, a value of the quantity R of rows of the interleaving matrix is 1, and a value of the quantity C of columns of the interleaving matrix is 32. In this case, the first interleaving matrix is shown in (c) in FIG. 5. Table 5.1.4-2 in 3GPP TS36.212 is searched for a column permutation pattern corresponding to the quantity C of columns, and column permutation is performed on the first interleaving matrix based on the column permutation pattern, to obtain a second interleaving matrix shown in (d) in FIG. 5.

3. Transport block (transport block, TB):

A TB is a basic unit for data transmission between a medium access control (medium access control, MAC) layer and a physical (physical, PHY) layer. For example, data sent from the MAC layer to the PHY layer may be organized in a form of a TB. One or more TBs may be sent from the MAC layer to the physical layer.

At the physical layer, a transmit end performs channel encoding and rate matching on an input bit sequence, and uses a bit sequence obtained through the rate matching as an output bit sequence. The output bit sequence may be defined as a TB, and the TB is sent. Correspondingly, after receiving the signal, a receive end decodes the signal to obtain a bit stream.

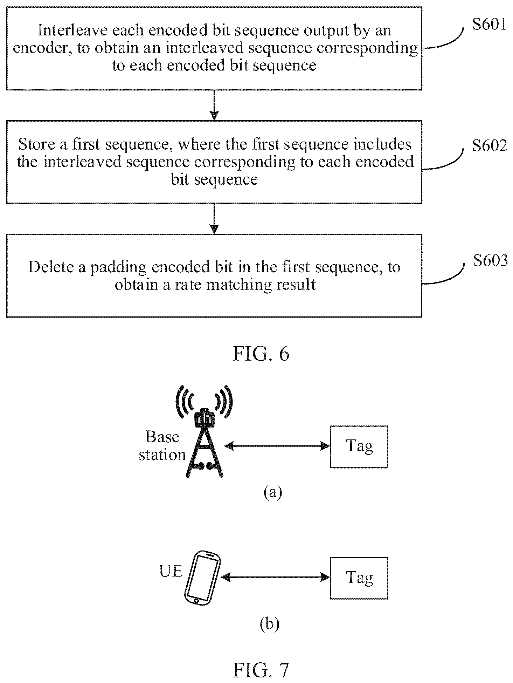

For example, as shown in FIG. 6, a rate matching process may include the following three steps:

Step S601: A terminal side interleaves each encoded bit sequence output by an encoder, to obtain an interleaved sequence corresponding to each encoded bit sequence.

Optionally, for details of an interleaving process in step S601 and the interleaving process described in step 1 and step 2, refer to the interleaving process described in step 1 and step 2. Details are not described in this application again.

Step S602: The terminal side stores a first sequence, where the first sequence includes the interleaved sequence corresponding to each encoded bit sequence.

For example, the encoder outputs three encoded sequences. A quantity of bits in the first sequence is 3*R*C. A sequence with numbers 0 to R*C-1 in the first sequence is a first encoded bit sequence, a sequence with numbers R*C to 2*R*C-1 is a second encoded bit sequence, and a sequence with numbers 2*R*C to 3*R*C-1 is a third encoded bit sequence.

Step S603: The terminal side deletes a padding bit in the first sequence, to obtain a rate matching result.

Optionally, a process of deleting the padding bit in the first sequence may also be referred to as puncturing, that is, deleting the padding bits in step 1. For example, an encoded bit sequence includes 28 bits, and R*C is equal to 32. In this case, in step 1, the terminal side may use four bits for padding, where numbers of the four bits are 28 to 31. In step 3, the terminal side deletes the bits numbered 28 to 31.

It should be noted that the foregoing merely uses an example to describe some steps in a data processing procedure at the physical layer. In actual application, the data processing procedure at the physical layer may further include layer mapping, precoding, modulation (modulation), time-frequency resource mapping, frequency-domain spectral shaping, serial-to-parallel conversion, parallel-to-serial conversion, amplification, and the like.

4. Internet of things (Internet of things, IoT) device:

An IoT device is a network-connected device that can communicate with another device and/or a network. With wide application of machine type communication (machine type communication, MTC) and IoT communication in 5th generation (5th generation, 5G) new radio (new radio, NR) communication, more IoT devices are connected in a network. Therefore, costs and power consumption requirements of the IoT devices need to be taken into account.

A narrowband IoT (narrowband IoT, NB-IoT) device may be considered based on costs and power consumption requirements. Power consumption of the NB-IoT device can reach a milliwatt (milliwatt, $mW$) level. In addition, the NB-IoT device needs to use an external energy supply (for example, a battery) to maintain a working state.

To further reduce costs and power consumption, an external carrier signal (for example, a radio frequency signal) is passively received to serve as a local energy supply. This communication mode may be referred to as passive IoT communication or backscatter (backscatter) communication. In a passive IoT communication system, a device can obtain energy by using a backscatter communication technology, and therefore may be referred to as a terminal device that can perform backscatter communication, or may be referred to as a passive IoT terminal device.

For example, the passive IoT terminal device may include tags. According to different power supply modes, the tags may be further classified into a passive tag and a semi-passive tag. The passive tag has no power supply device or no power supply circuit, and obtains an energy supply by performing filtering and other processing on the received carrier signal, to maintain normal working of the terminal device by relying on the energy.

An ambient (Ambient) IoT system is introduced into 3GPP Release 18 (Release 18, R18). There are two types of devices in the ambient IoT system: (1) a passive (passive) tag: a device having a capability of reflecting a downlink carrier to send an uplink signal, where power consumption of this type of device is less than or equal to 1 microwatt (microwatt, $\mu W$); and (2) an active (active) tag: a device having a capability of actively generating an uplink carrier, where this type of device has an energy storage circuit, but still needs an external device to provide some energy. In addition, because power consumption of this type of device is limited (that is, the power consumption of this type of device is less than or equal to 5 $mW$), a maximum carrier frequency tolerance generated by this type of device is much greater than 0.1 part per million (part per million, ppm). For example, a value of the maximum carrier frequency tolerance of this type of the terminal may be 1 ppm, 5 ppm, 10 ppm, 20 ppm, 50 ppm, or the like. This type of terminal device may also be referred to as an active IoT device.

Although the foregoing tags (such as a passive tag, a semi-passive tag, a passive tag, and an active tag) can meet costs and power consumption requirements, the tags cannot process complex channel encoding operations due to power consumption limits of the tags. Therefore, how to ensure uplink transmission performance of tags (such as a passive tag, a semi-passive tag, a passive tag, and an active tag) with limited power consumption is an urgent problem to be discussed.

In a possible implementation, before sending an uplink signal, the terminal side (for example, a tag) performs encoding, rate matching (for example, padding, interleaving, storage, and puncturing), and other operations on the uplink signal, and sends a result obtained through the rate matching.

For example, for encoding, rate matching (such as padding, interleaving, storage, and puncturing), and other operations performed on the uplink signal, refer to related descriptions in FIG. 1 to FIG. 6. Details are not described in embodiments of this application again.

However, in this possible implementation, because complexity of the rate matching process is high and the terminal device needs to have high computing/storage overheads, a tag with limited power consumption cannot meet requirements on complexity and computing/storage in the rate matching process.

In another possible implementation, the terminal side (for example, a tag) does not perform a rate matching operation, and when an encoder outputs a sequence in an encoding process, the terminal side sends an encoded bit sequence output by the encoder.

For example, a bit rate is 1/3 bit/s, and an input bit sequence of an uplink signal is 10 bits (for example, the 10-bit input bit sequence may be $c_0c_1c_2c_3c_4c_5c_6c_7c_8c_9$). A first bit $c_0$ is input into the encoder, the encoder outputs bits $d_0$ corresponding to three bits $c_0$ (where a 1st bit is $d_0^{(1)}$, a 2nd bit is $d_0^{(2)}$, and a 3rd bit is $d_0^{(3)}$), and then the terminal side outputs $d_0^{(1)}d_0^{(2)}d_0^{(3)}$. A second bit $c_1$ is input into the encoder, the encoder outputs bits $d_1$ corresponding to three bits $c_1$ (where a 1st bit is $d_1^{(1)}$, a 2nd bit is $d_1^{(2)}$, and a 3rd bit is $d_1^{(3)}$), and then the terminal side outputs $d_1^{(1)}d_1^{(2)}d_1^{(3)}$. The rest can be deduced by analogy, until the terminal side outputs a tenth bit $c_9$, the encoder outputs bits $d_9$ corresponding to three bits $c_9$ (where a 1st bit is $d_9^{(1)}$, a 2nd bit is $d_9^{(2)}$, and a 3rd bit is $d_9^{(3)}$), and then the terminal outputs $d_9^{(1)}d_9^{(2)}d_9^{(3)}$. In other words, in this possible implementation, a sequence output by the terminal side is $d_0^{(1)}d_0^{(2)}d_0^{(3)}d_1^{(1)}d_1^{(2)}d_1^{(3)}...d_9^{(1)}d_9^{(2)}d_9^{(3)}$.

An uplink signal with a large transport block size (transport block size, TBS) is more affected by a time-varying channel during transmission, and an interleaving operation is not performed in this possible implementation. Therefore, adjacent bits of the uplink signal experience a similar time-varying channel characteristic during transmission. In this case, a time diversity gain cannot be obtained for the adjacent bits after encoding, leading to deterioration in uplink transmission performance.

In view of this, this application provides a communication method. A second bit sequence output by a terminal device is obtained by arranging, in a predefined order, a bit sequence obtained through encoding performed on a first bit sequence, and the first bit sequence is an input bit sequence of an uplink signal. A process of obtaining the second bit sequence by arranging, in the predefined order, the bit sequence obtained through the encoding performed on the first bit sequence may be represented as re-arranging a bit sequence output by an encoder, to reduce a temporal correlation between adjacent bits in channel transmission and improve data transmission reliability.

Because the second bit sequence sent by the terminal device can be used to reduce the temporal correlation between the adjacent bits in channel transmission and improve data transmission reliability, same effect as a rate matching step (for example, padding, interleaving, or puncturing) can be achieved (same encoding effect as encoded bit interleaving is achieved, that is, the temporal correlation between the adjacent bits in channel transmission is reduced and data transmission reliability is improved) without a need to perform the rate matching step. This reduces processing complexity of the terminal device. Moreover, because the second bit sequence is prestored, the terminal device does not need to perform encoding, arranging in the predefined order, and other steps after receiving first information, but directly extracts the second bit sequence from stored information and sends the second bit sequence to a network device. This further reduces complexity of channel encoding.

The technical solutions provided in this application can be applied to various communication systems. The communication systems may be a 4th generation (4th generation, 4G) long term evolution (long term evolution, LTE) system, an LTE-advanced (LTE-Advanced, LTE-A) system, a 5G NR system, an internet of vehicles (vehicle-to-everything, V2X) system, an LTE-NR hybrid networking system, a device-to-device (device to device, D2D) system, a machine-to-machine (machine-to-machine, M2M) communication system, an IoT, and other next generation communication systems, for example, a 6th generation (6th generation, 6G) communication system. Alternatively, the communication system may be a non-3GPP communication system. This is not limited.

Optionally, the technical solutions provided in this application can be applied to a communication scenario in which there is a device with limited power consumption. For example, the communication scenario may include service scenarios such as backscatter communication, passive IoT communication, and ambient IoT in the 5G NR system.

The communication systems to which this application is applicable are merely examples for description, and are not limited thereto. Unified descriptions are provided herein, and are not described below again.

For example, each of the communication systems to which the technical solutions provided in this application are applicable may include at least one terminal device and at least one network device. The terminal device and the network device can communicate with each other.

Optionally, the terminal device may be implemented in the following two manners:

In a possible implementation, the terminal device may be a user side device configured to implement a wireless communication function. In this case, the network device may be a node in a radio access network (radio access network, RAN), and the network device may also be referred to as a base station, or may be referred to as a radio access network node.

Optionally, the terminal device may be a terminal, a chip that may be used in the terminal, or the like. The terminal may be user equipment (user equipment, UE), an access terminal, a terminal unit, a terminal station, a mobile station, a remote station, a remote terminal, a mobile device, a wireless communication device, a terminal agent, a terminal apparatus, or the like in a 5G network or a public land mobile network (public land mobile network, PLMN) that evolves from 5G. The access terminal may be a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in the IoT, for example, a terminal in V2X (for example, an internet-of-vehicles device), a terminal in D2D communication, or a terminal in M2M communication. The terminal may be mobile or immovable.

Optionally, the network device may include an evolved NodeB (NodeB or eNB or e-NodeB, evolved NodeB) in an LTE system or an LTE-A system, for example, a conventional macro base station eNB or a micro base station eNB in a heterogeneous network scenario. Alternatively, the network device may include a next generation NodeB (next generation NodeB, gNB) in the NR system. Alternatively, the network device may include a transmission reception point (transmission reception point, TRP), a home NodeB (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the network device may include a base station in a non-terrestrial network (non-terrestrial network, NTN), that is, may be deployed on a high-altitude platform or a satellite. In the NTN, the radio access network device may be used as a layer 1 (L1) relay (relay), may be used as a base station, may be used as a DU, or may be used as an integrated access and backhaul (integrated access and backhaul, IAB) node. Alternatively, the radio access network device may be a device that implements a base station function in the IoT, for example, a device that implements a base station function in V2X, D2D, or machine-to-machine (machine-to-machine, M2M). This is not limited in embodiments of this application.

Optionally, the base station in embodiments of this application may include various forms of base stations, for example, a macro base station, a micro base station (also referred to as a small cell), a relay station, an access point, a home NodeB, a TRP, a transmission point (transmission point, TP), and a mobile switching center. This is not specifically limited in embodiments of this application.

In another possible implementation, the terminal device may be a device with limited power consumption. For example, the terminal device is a device that cannot process complex channel encoding operations.

Optionally, the terminal device may be a device that obtains an energy supply of the terminal device by receiving an external carrier signal (for example, a radio frequency signal). In this case, the network device is a device that sends the carrier signal (that is, supplies energy).

For example, the terminal device may obtain the carrier signal through backscatter communication, and the terminal device may be referred to as a device having a backscattering capability. Devices having a backscattering capability include a device that has no power supply device or no power supply unit (for example, a passive device, a passive IoT device, or a device having a capability of reflecting a downlink carrier to send an uplink signal) and a device that has a power supply circuit or a power supply unit but still needs to be supplied with energy by using a backscatter communication technology (for example, a semi-passive device, a semi-passive IoT device, or an active IoT device).

For example, the network device may be a reader (reader) device, a helper (helper) device, UE, or the like.

For example, for a base station and a tag shown in (a) in FIG. 7, because power consumption of the tag is limited, in this case, the tag may be used as a terminal device, and the base station may be used as a network device. Alternatively, for example, for UE and a tag shown in (b) in FIG. 7, because power consumption of the tag is limited, in this case, the tag may be configured as a terminal device, and the UE may be used as a network device.

With reference to accompanying drawings, the following describes communication methods provided in embodiments of this application. It can be understood that in embodiments of this application, the network device or the terminal device may perform some or all of the steps in embodiment of this application. These steps or operations are merely examples. In embodiments of this application, other steps or variations of various steps may be further performed. In addition, the steps may be performed in a sequence different from a sequence presented in embodiments of this application, and not all the operations in embodiments of this application may be performed.

It should be noted that names of messages between devices, names of parameters in the messages, or the like in the following embodiments of this application are merely examples, and the names thereof may be other names in specific implementation. This is not specifically limited in embodiments of this application.

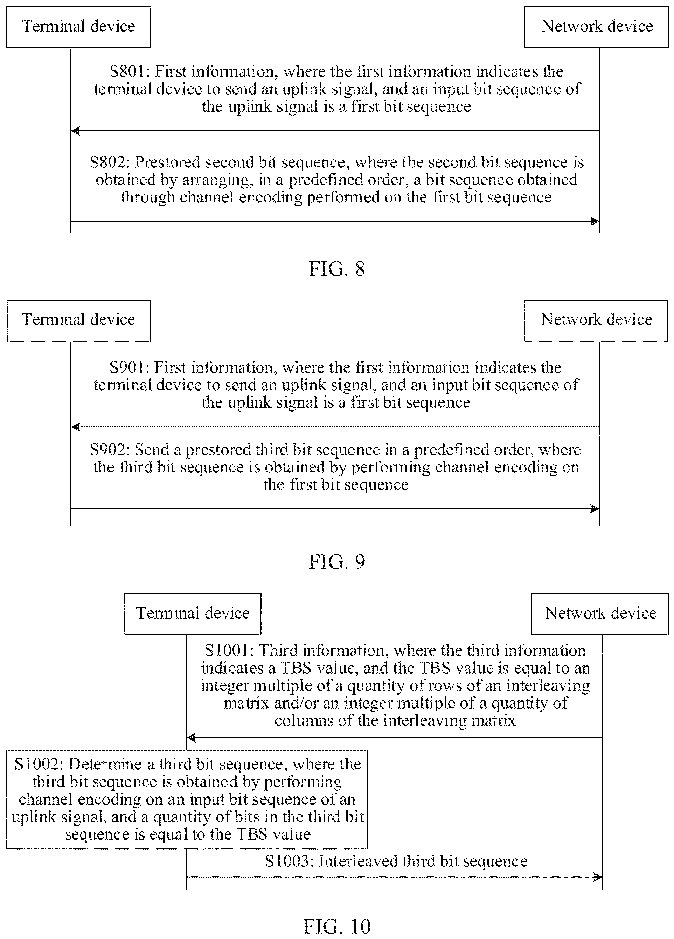

FIG. 8 shows a communication method according to an embodiment of this application. The communication method includes the following steps:

S801: A network device sends first information to a terminal device. Correspondingly, the terminal device receives the first information from the network device. The first information indicates the terminal device to send an uplink signal, and an input bit sequence of the uplink signal is a first bit sequence.

Optionally, the first information may be carried in downlink control information (downlink control information, DCI), downlink MAC signaling, or radio resource control (radio resource control, RRC) signaling. The first information may also be referred to as scheduling information, or may be referred to as configuration information. This is not limited in this application. That the first information indicates the terminal device to send the uplink signal may also be referred to as follows: The first information is used to configure (or semi-statically configure) the terminal device to send the uplink signal. This is not limited in this application.

S802: The terminal device outputs a prestored second bit sequence to the network device. Correspondingly, the network device receives the second bit sequence from the terminal device. The second bit sequence is obtained by arranging, in a predefined order, a bit sequence obtained through channel encoding performed on the first bit sequence.

Optionally, that the terminal device outputs the prestored second bit sequence to the network device includes: The terminal device sends the uplink signal to the network device, where the second bit sequence is carried in the uplink signal.

Optionally, pre-storage may also be referred to as storage in advance, offline storage, or pre-storage in a memory. This is not limited in this application.

Optionally, before step S802, the communication method further includes: The terminal device prestores the second bit sequence.

Optionally, a process in which the terminal device prestores the second bit sequence may include: The terminal device inputs the first bit sequence into an encoder to obtain at least one third bit sequence (that is, at least one encoded bit sequence output by the encoder, and an example is used in this embodiment of this application in which the encoder outputs a plurality of encoded bit sequences, namely, a plurality of third bit sequences); arranges each of the plurality of third bit sequences in the predefined order, to obtain a second bit sequence corresponding to each third bit sequence; and stores the second bit sequence corresponding to each third bit sequence.

For example, the third bit sequence may also be referred to as an encoded bit sequence. This is not limited in embodiments of this application. For a process in which the terminal device inputs the first bit sequence into the encoder to obtain the plurality of third bit sequences, refer to related descriptions in FIG. 1. Details are not described in embodiments of this application again.

It should be understood that the third bit sequence in this embodiment of this application can be understood as any one of the plurality of encoded bit sequences, and the second bit sequence in this embodiment of this application can be understood as being obtained by arranging any encoded bit sequence in the predefined order. For example, the second bit sequence is obtained by arranging the third bit sequence in the predefined order. Therefore, the second bit sequence is any one of the second bit sequences respectively corresponding to the third bit sequences.

Optionally, the predefined order may be predefined in a protocol, or may be configured by the network device for the terminal device.

For example, when the predefined order is configured by the network device for the terminal device, the predefined order may be carried in DCI, downlink MAC signaling, or RRC signaling. For example, the downlink MAC signaling or the RRC signaling may be signaling that carries a message Msg2 or Msg4 in a random access procedure.

According to the communication method provided in this embodiment of this application, the second bit sequence output by the terminal device is obtained by arranging, in the predefined order, the bit sequence obtained through the encoding performed on the first bit sequence, and the first bit sequence is the input bit sequence of the uplink signal. A process of obtaining the second bit sequence by arranging, in the predefined order, the bit sequence obtained through the encoding performed on the first bit sequence may be represented as re-arranging a bit sequence output by the encoder, to reduce a temporal correlation between adjacent bits in channel transmission and improve data transmission reliability.

In addition, because the second bit sequence output by the terminal device can be used to reduce the temporal correlation between the adjacent bits in channel transmission and improve data transmission reliability, same effect as a rate matching step (for example, padding, interleaving, or puncturing) can be achieved (same encoding effect as encoded bit interleaving is achieved, that is, the temporal correlation between the adjacent bits in channel transmission is reduced and data transmission reliability is improved) without a need to perform the rate matching step. This reduces processing complexity of the terminal device. Moreover, because the second bit sequence is prestored, the terminal device does not need to perform a channel encoding operation, arranging in the predefined order, and other steps each time after receiving first information, but directly extracts the second bit sequence from stored information and sends the second bit sequence to the network device. This further reduces complexity of channel encoding.

The foregoing provides an overall description of the communication method provided in this embodiment of this application. The following details the predefined order mentioned in the foregoing embodiment.

Optionally, the predefined order may include an output order of an interleaving matrix when the third bit sequence is input into the interleaving matrix. Optionally, the output order of the interleaving matrix may also be referred to as a bit order output from the interleaving matrix or a bit arranging order output from the interleaving matrix. This is not limited in this application.

It should be understood that the output order of the interleaving matrix when the third bit sequence is input into the interleaving matrix does not mean that a step of inputting the third bit sequence into the interleaving matrix is included in a process of determining the second bit sequence in this embodiment of this application, but the predefined order is the output order of the interleaving matrix if the third bit sequence is input into the interleaving matrix. The output order of the interleaving matrix is a arranging order of numbers of bits in a bit sequence output from the interleaving matrix. In other words, the terminal does not perform an action of inputting the third bit sequence into the interleaving matrix.

For example, a quantity of rows of the interleaving matrix is R and a quantity of columns is C, and the predefined order may be implemented in the following two cases:

Case 1: The interleaving matrix has no column permutation pattern. In this case, the interleaving matrix is shown in FIG. 2. Because the output order of the interleaving matrix is output column by column, the predefined order is: 0, C, 2C, ..., (R-1)*C, 1, C+1, 2C+1, ..., (R-1)*C+1, 2, C+2, 2C+2, ..., (R-1)*C+2, 3, C+3, 2C+3, ..., (R-1)*C+3, ..., C-2, 2C-2, 3C-2, ..., R*C-2, C-1, 2C-1, 3C-1, ..., and R*C-1.

For example, a quantity of bits in the third bit sequence is 20, the quantity of rows of the interleaving matrix is 4, and the quantity of columns of the interleaving matrix is 5. Assuming that the third bit sequence is input into the interleaving matrix, the predefined order is: 0, 5, 10, 15, 1, 6, 11, 16, 2, 7, 12, 17, 3, 8, 13, 18, 4, 9, 14, and 19 in this case.

Case 2: The interleaving matrix has a column permutation pattern. For example, the column permutation pattern is permutation between a second column and a $(C-1)^{th}$ column and permutation between a third column and a $C^{th}$ column. In this case, the interleaving matrix is shown in FIG. 4. Because the output order of the interleaving matrix is output column by column, the predefined order is: 0, C, 2C, ..., (R-1)*C, C-2, 2C-2, 3C-2, ..., R*C-2, C-1, 2C-1, 3C-1, ..., R*C-1, 3, C+3, 2C+3, ..., (R-1)*C+3, 1, C+1, 2C+1, ..., (R-1)*C+1, 2, C+2, 2C+2, ..., and (R-1)*C+2.

For example, a quantity of bits in the third bit sequence is 20, the quantity of rows of the interleaving matrix is 4, and the quantity of columns of the interleaving matrix is 5. Assuming that the third bit sequence is input into the interleaving matrix, the predefined order is: 0, 5, 10, 15, 3, 8, 13, 18, 4, 9, 14, 19, 1, 6, 11, 16, 2, 7, 12, and 17 in this case.

According to this optional solution, the terminal device may arrange, in the output order of the interleaving matrix, the bit sequence obtained by encoding the first bit sequence, to obtain the second bit sequence. An objective of inputting the third bit sequence (that is, a bit sequence obtained by encoding the input bit sequence of the uplink signal) into the interleaving matrix is to re-arrange the third bit sequence, to reduce a temporal correlation between adjacent bits in the third bit sequence in channel transmission and improve data transmission reliability. Therefore, the temporal correlation that is between adjacent bits in the second bit sequence arranged in the output order of the interleaving matrix and that is in channel transmission is less than a temporal correlation between adjacent bits in the first bit sequence in channel transmission. In this way, compared with directly outputting, by the terminal device, the bit sequence (namely, the third bit sequence) obtained by encoding the first bit sequence, outputting the second bit sequence by the terminal device can improve data transmission reliability.

Optionally, the quantity of bits in the third bit sequence is equal to a product of the quantity of rows of the interleaving matrix and the quantity of columns of the interleaving matrix.

For example, the quantity of rows of the interleaving matrix and/or the quantity of columns of the interleaving matrix are/is indicated by the network device to the terminal device or configured by the network device for the terminal device by sending information. For example, before the terminal device prestores the second bit sequence, the communication method may further include: The network device sends second information to the terminal device. Correspondingly, the terminal device receives the second information from the network device. The second information indicates or configures the quantity of rows of the interleaving matrix and/or the quantity of columns of the interleaving matrix.

According to this optional solution, based on the output order of the interleaving matrix, the terminal device may directly perform arranging for output on the bit sequence (namely, the third bit sequence) obtained by encoding the first bit sequence, to obtain the second bit sequence, and does not need to perform bit padding, arranging in the interleaving matrix for output after the bit padding, puncturing to remove an invalid padding bit, and other steps. This avoids padding and puncturing operations, and effectively reduces calculation complexity and storage complexity of the terminal, thereby ensuring low power consumption effect of the terminal device.

Optionally, the terminal device may determine the quantity of bits in the third bit sequence based on the indication of the second information.

Optionally, that the terminal device may determine the quantity of bits in the third bit sequence based on the indication of the second information may also be referred to as follows: The terminal device may determine the quantity of bits in the third bit sequence based on a configuration (or semi-static configuration) of the second information. This is not limited in this application.

Optionally, the second information and the first information may be located in a same piece of information. For example, the second information and the first information are located in a same piece of DCI. Further, the second information and the first information may be located in different fields of the DCI.

It can be learned from FIG. 2 and FIG. 4 that different values of the quantity of rows of the interleaving matrix and the quantity of columns of the interleaving matrix are respectively corresponding to different interleaving matrices. Therefore, the terminal device can determine a unique interleaving matrix based on the second information, or the second information and the quantity of bits in the third bit sequence. The unique interleaving matrix is the foregoing interleaving matrix into which the third bit sequence is input. For example, the quantity of rows of the interleaving matrix, the quantity of columns of the interleaving matrix, and the quantity of bits in the third bit sequence may satisfy the following relationship (1):

the quantity of bits in the third bit sequence = the quantity of rows of the interleaving matrix * the quantity of columns of the interleaving matrix

$$(1)$$

In a first example, the second information may indicate the quantity of rows of the interleaving matrix. In this case, the quantity of bits in the third bit sequence is equal to an integer multiple of the quantity of rows of the interleaving matrix.

For example, when the second information indicates the quantity of rows of the interleaving matrix, the terminal device can learn, through calculation, the quantity of columns of the interleaving matrix based on the quantity of rows of the interleaving matrix and the quantity of bits in the third bit sequence, to determine a unique interleaving matrix. For example, if the quantity of bits in the third bit sequence is 20 and the quantity of rows of the interleaving matrix is 4, it is learned through calculation that the quantity of columns of the interleaving matrix is 5. In this case, the interleaving matrix with four rows and five columns can be determined as a unique interleaving matrix.

In a second example, the second information may indicate the quantity of columns of the interleaving matrix. In this case, the quantity of bits in the third bit sequence is equal to an integer multiple of the quantity of columns of the interleaving matrix.

For example, when the second information indicates the quantity of columns of the interleaving matrix, the terminal device can learn, through calculation, the quantity of rows of the interleaving matrix based on the quantity of columns of the interleaving matrix and the quantity of bits in the third bit sequence, to determine a unique interleaving matrix. For example, if the quantity of bits in the third bit sequence is 20 and the quantity of columns of the interleaving matrix is 5, it is learned through calculation that the quantity of rows of the interleaving matrix is 4. In this case, the interleaving matrix with four rows and five columns can be determined as a unique interleaving matrix.

In a third example, the second information may indicate the quantity of rows of the interleaving matrix and the quantity of columns of the interleaving matrix. In this case, the quantity of bits in the third bit sequence is equal to the product of the quantity of rows of the interleaving matrix and the quantity of columns of the interleaving matrix.

For example, when the second information indicates the quantity of rows of the interleaving matrix and the quantity of columns of the interleaving matrix, the terminal device can determine a unique interleaving matrix based on the quantity of rows of the interleaving matrix and the quantity of columns of the interleaving matrix. For example, the quantity of bits in the third bit sequence is 20, the quantity of rows of the interleaving matrix is 4, and the quantity of columns of the interleaving matrix is 5. In this case, a unique interleaving matrix is the interleaving matrix with four rows and five columns.

According to this optional solution, the quantity of bits in the third bit sequence needs to be equal to the product of the quantity of rows of the interleaving matrix and the quantity of columns of the interleaving matrix. Therefore, when the second information indicates the quantity of rows of the interleaving matrix or the quantity of columns of the interleaving matrix, that is, when the network device does not explicitly indicate the interleaving matrix corresponding to the third bit sequence, the terminal device may determine the quantity of columns of the interleaving matrix or the quantity of rows of the interleaving matrix based on the second information and the quantity of bits in the third bit sequence, to determine the interleaving matrix corresponding to the third bit sequence; and then determine the output order of the interleaving matrix when the third bit sequence is input into the interleaving matrix, that is, determine the predefined order.

In addition to the foregoing communication method, an embodiment of this application further provides another communication method. As shown in FIG. 9, the communication method may include the following steps:

S901: Step S901 is the same as step S801. For details, refer to related descriptions in step S801. Details are not described in embodiments of this application again.

S902: The terminal device outputs a prestored third bit sequence in a predefined order, where the third bit sequence is obtained by performing channel encoding on the first bit sequence.

For example, the predefined order in step S902 is the same as the predefined order in step S802. For details, refer to related descriptions in step S802. Details are not described in embodiments of this application again.

Optionally, before step S902, the communication method further includes: The terminal device prestores the third bit sequence.

Optionally, a process in which the terminal device prestores the third bit sequence may include: The terminal device inputs the first bit sequence into an encoder to obtain a plurality of third bit sequences (that is, a plurality of encoded bit sequences output by the encoder); and stores the plurality of third bit sequences.

For example, for the third bit sequence, refer to related descriptions of the third bit sequence shown in FIG. 8. Details are not described in embodiments of this application again.

For example, the terminal device may send the third bit sequence in the following two possible implementations: In a possible implementation, the terminal device arranges the third bit sequence in the predefined order, and outputs a arranged third bit sequence.

For example, a quantity of bits in the third bit sequence is 20 (numbers of the bits in the third bit sequence are 0 to 19), and the predefined order is 0, 5, 10, 15, 1, 6, 11, 16, 2, 7, 12, 17, 3, 8, 13, 18, 4, 9, 14, and 19. The terminal device arranges the third bit sequence in the predefined order, to obtain numbers of bits in the arranged third bit sequence: 0, 5, 10, 15, 1, 6, 11, 16, 2, 7, 12, 17, 3, 8, 13, 18, 4, 9, 14, and 19. The terminal device sequentially outputs the bits in the third bit sequence.

In another possible implementation, the terminal device does not need to arrange the third bit sequence, and directly outputs bits in the third bit sequence in the predefined order.

For example, a quantity of bits in the third bit sequence is 20 (numbers of the bits in the third bit sequence are 0 to 19), and the predefined order is 0, 5, 10, 15, 1, 6, 11, 16, 2, 7, 12, 17, 3, 8, 13, 18, 4, 9, 14, and 19. The terminal device first outputs a bit numbered 0 in the third bit sequence, outputs a bit numbered 5 in the third bit sequence, then outputs a bit numbered 10 in the third bit sequence, and so on. Finally, the terminal device outputs a bit numbered 19 in the third bit sequence.

According to the communication method provided in this embodiment of this application, the third bit sequence output by the terminal device in the predefined order is obtained by encoding the first bit sequence, and the first bit sequence is the input bit sequence of the uplink signal. A process of outputting the third bit sequence in the predefined order may be represented as re-arranging a bit sequence output by the encoder, to reduce a temporal correlation between adjacent bits in channel transmission and improve data transmission reliability.

In addition, because the third bit sequence output by the terminal device in the predefined order can be used to reduce the temporal correlation between the adjacent bits in channel transmission and improve data transmission reliability, same effect as a rate matching step (for example, padding, interleaving, or puncturing) can be achieved (same encoding effect as encoded bit interleaving is achieved, that is, the temporal correlation between the adjacent bits in channel transmission is reduced and data transmission reliability is improved) without a need to perform the rate matching step. This reduces complexity of channel encoding. Moreover, because the third bit sequence is prestored, the terminal device does not need to perform an encoding step after receiving the first information, but directly extracts the third bit sequence from stored information. This further reduces the complexity of channel encoding.

In addition to the foregoing communication methods, an embodiment of this application further provides another communication method. As shown in FIG. 10, the communication method may include the following steps:

S1001: A network device sends third information to a terminal device. Correspondingly, the terminal device receives the third information from the network device. The third information indicates or configures a TBS value, and the TBS value is equal to a product of a quantity of rows of an interleaving matrix and a quantity of columns of the interleaving matrix.

S1002: The terminal device determines a third bit sequence, where the third bit sequence is obtained by performing channel encoding on an input bit sequence of an uplink signal, and a quantity of bits in the third bit sequence is equal to the TBS value.

For example, performing channel encoding on the input bit sequence of the uplink signal can be understood as performing channel encoding on a first bit sequence. A method for determining the third bit sequence is similar to related descriptions of determining the third bit sequence in FIG. 8 to FIG. 10. Details are not described in embodiments of this application again. It only should be noted that in a process of determining the third bit sequence by using the methods in FIG. 8 to FIG. 10, only that the quantity of bits in the third bit sequence is equal to the TBS value needs to be ensured.

S1003: The terminal device outputs an interleaved third bit sequence to the network device. Correspondingly, the network device receives the interleaved third bit sequence from the network device.

For example, after determining the third bit sequence, the terminal device inputs the third bit sequence into the interleaving matrix, where the interleaved third bit sequence is output from the interleaving matrix. Then, the terminal device outputs the interleaved third bit sequence to the network device.

Optionally, the terminal device may determine the interleaving matrix based on second information sent by the network device. The second information indicates or configures the quantity of rows of the interleaving matrix and/or the quantity of columns of the interleaving matrix.

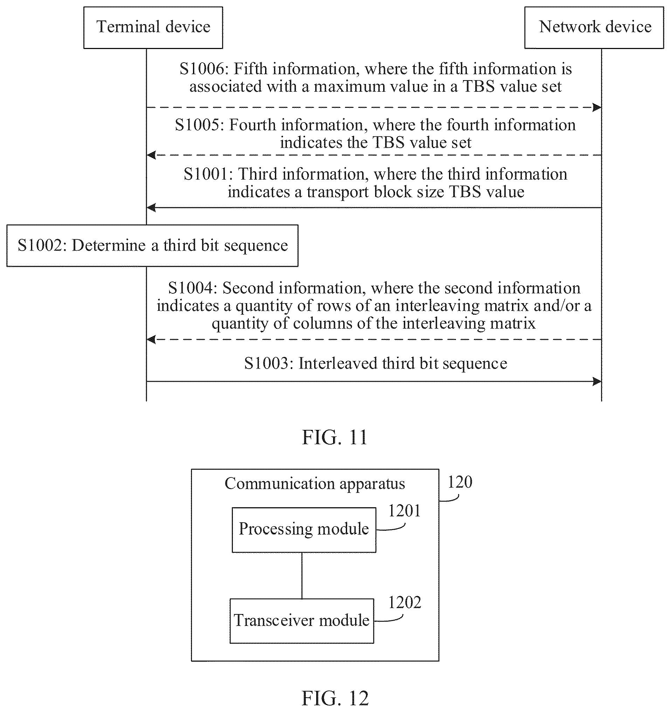

For example, before step S1003, as shown in FIG. 11, the communication method further includes step S1004: S1004: The network device sends second information to the terminal device. Correspondingly, the terminal device receives the second information from the network device.

According to the communication method provided in this embodiment of this application, the quantity of bits (that is, the TBS value) in the third bit sequence is equal to the product of the quantity of rows of the interleaving matrix and the quantity of columns of the interleaving matrix. Therefore, the terminal device does not need to perform a padding operation on the third bit sequence in a process of inputting the third bit sequence into the interleaving matrix, and does not need to perform a puncturing operation on the interleaved third bit sequence after the interleaved third bit sequence is output from the interleaving matrix. This reduces complexity of performing channel encoding by the terminal device.

The foregoing provides an overall description of the communication method provided in this embodiment of this application. The following details the third information (that is, the TBS value) mentioned in the foregoing embodiment.

Optionally, before step S1001, the communication method further includes: The network device determines the third information, that is, determines the TBS value.

Optionally, the third information and the second information may be located in a same piece of information. For example, the second information and the first information are located in a same piece of DCI. Further, the third information and the second information may be located in different fields of the DCI.

In a possible implementation, when the second information indicates or configures the quantity of rows of the interleaving matrix and the quantity of columns of the interleaving matrix, the network device directly determines the product of the quantity of rows of the interleaving matrix and the quantity of columns of the interleaving matrix as the TBS value.

For example, the second information indicates or configures the quantity of rows of the interleaving matrix as 4 and the quantity of columns of the interleaving matrix as 5. In this case, the third information directly indicates or configures the TBS value as 20 bits.

In another possible implementation, when the second information indicates or configures the quantity of rows of the interleaving matrix or the quantity of columns of the interleaving matrix, the network device first determines a TBS value set; and then determines the TBS value from the TBS value set. Each value in the TBS value set is an integer multiple of the quantity of rows of the interleaving matrix or an integer multiple of the quantity of columns of the interleaving matrix.

Optionally, all values in the TBS value set that may be indicated or configured by using the quantity of rows of the interleaving matrix are less than 32. For example, the values in the TBS value set include one or more of 4, 8, or 16.

For example, before step S1001, as shown in FIG. 11, the communication method further includes step S1005: S1005: The network device sends fourth information to the terminal device. Correspondingly, the terminal device receives the fourth information from the network device. The fourth information indicates or configures the TBS value set.

For example, the third information may be implemented in the following two manners: In an example, when the second information indicates or configures the quantity of rows of the interleaving matrix, each value in the TBS value set is the integer multiple of the quantity of rows of the interleaving matrix.

For example, the quantity of rows of the interleaving matrix is 4, and the TBS value set is measured in bits. The TBS value in the TBS value set determined by the network device is an integer multiple of 4. For example, the TBS value set may be {4, 8, 12, 16, ..., 884, 888, 892, 896}. In this case, the third information may indicate any value in the TBS value set as the TBS value. For example, if the third information indicates that the TBS value is 20 bits, it can be learned through calculation, by using the TBS value and the indication of the second information, that the quantity of columns of the interleaving matrix is 5 in this case.

In another example, when the second information indicates or configures the quantity of columns of the interleaving matrix, each value in the TBS value set is the integer multiple of the quantity of columns of the interleaving matrix.

For example, the quantity of columns of the interleaving matrix is 5, and the TBS value set is measured in bits. The TBS value in the TBS value set determined by the network device is an integer multiple of 5. For example, the TBS value set may be {5, 10, 15, 20, ..., 880, 885, 895, 900}. In this case, the third information may indicate any value in the TBS value set as the TBS value. For example, if the third information indicates that the TBS value is 20 bits, it can be learned through calculation, by using the TBS value and the indication of the second information, that the quantity of rows of the interleaving matrix is 4 in this case.

Optionally, a sequence of step S1004 and step S1005 is not limited in this embodiment of this application. Step S1004 may be performed before step S1005, step S1004 may be performed after step S1005, or step S1004 and step S1005 may be simultaneously performed.

A causal relationship between the second information and the TBS value set is not limited in embodiments of this application. The network device may determine the TBS value set based on the second information, or the network device may determine the second information based on the TBS value set. Only that there is a correspondence between the second information and the TBS value set is emphasized in this embodiment of this application. To be specific, if the second information indicates the quantity of rows of the interleaving matrix, the TBS value set is an integer multiple of the quantity of rows of the interleaving matrix; or if the TBS value set is an integer multiple of the quantity of rows of the interleaving matrix, the second information indicates the quantity of rows of the interleaving matrix. If the second information indicates the quantity of columns of the interleaving matrix, the TBS value set is an integer multiple of the quantity of columns of the interleaving matrix; or if the TBS value set is an integer multiple of the quantity of columns of the interleaving matrix, the second information indicates the quantity of columns of the interleaving matrix.

According to this optional solution, when the second information indicates or configures the quantity of rows of the interleaving matrix, each value in the TBS value set is the integer multiple of the quantity of rows of the interleaving matrix; or when the second information indicates or configures the quantity of columns of the interleaving matrix, each value in the TBS value set is the integer multiple of the quantity of columns of the interleaving matrix. In addition, the TBS value is a value in the TBS value set. Therefore, the terminal device can determine, based on the third information and the second information, the quantity of columns of the interleaving matrix and the quantity of rows of the interleaving matrix corresponding to the third bit sequence. In this way, the terminal device does not need to perform a padding operation on the third bit sequence in a process of inputting the third bit sequence into the interleaving matrix, and does not need to perform a puncturing operation on the interleaved third bit sequence after the interleaved third bit sequence is output from the interleaving matrix. This reduces complexity of channel encoding.

Optionally, a maximum value in the TBS value set is associated with fifth information reported by the terminal device. In other words, the maximum value in the TBS value set is related to the fifth information. The network device may determine the maximum value in the TBS value set based on the fifth information, and indicate the maximum value to the terminal device or configure the maximum value for the terminal device. The fifth information includes a type of the terminal device and/or a capability level of the terminal device, the type of the terminal device includes at least one of a terminal type capable of actively generating an uplink carrier and a terminal type capable of reflecting a downlink carrier to send an uplink signal, and the capability level of the terminal device includes at least one of a memory storage level, an energy storage level, and a power consumption level.

Optionally, a value of the quantity of rows of the interleaving matrix or a maximum value of the quantity of rows is associated with the fifth information. In other words, the value of the quantity of rows of the interleaving matrix or the maximum value of the quantity of rows is related to the fifth information. The network device may determine the value of the quantity of rows of the interleaving matrix or the maximum value of the quantity of rows based on the fifth information, and indicate the value or the maximum value to the terminal device or configure the value or the maximum value for the terminal device.

For example, before step S1001, as shown in FIG. 11, the communication method further includes step S1006: S1006: The terminal device sends the fifth information to the network device. Correspondingly, the network device receives the fifth information from the terminal device.

Optionally, the fifth information may be carried in an Msg1 or an Msg3 in a random procedure. When the maximum value in the TBS value set is associated with the fifth information:

In an example, the maximum value in the TBS value set is positively correlated with the capability level of the terminal device. In other words, a higher capability level indicates a larger maximum value in the TBS value set.

For example, the capability level includes the memory storage level and a memory storage level 1 is higher than a memory storage level 2. For the memory storage level 1, the TBS value set may be {32, 64, 96, 128, ..., 800, 832, 864, 896}, and in this case, the maximum value in the TBS value set is 896. For the memory storage level 2, the TBS value set may be {8, 16, 24, 32, ..., 104, 112, 120, 128}, and in this case, the maximum value in the TBS value set is 128. A maximum value in the TBS value set for the memory storage level 1 is greater than a maximum value in the TBS value set for the memory storage level 2.

It should be noted that the foregoing only uses an example in which the capability level includes the memory storage level for description. Cases in which the capability level may further include the energy storage level and the power consumption level are similar to the foregoing case in which the capability level includes the memory storage level. For details, refer to related descriptions in which the capability level includes the memory storage level. Details are not described in embodiments of this application again.

In a second example, the maximum value in the TBS value set is associated with the type of the terminal device. A maximum value in the TBS value set when the type of the terminal device is the terminal type capable of actively generating an uplink carrier is greater than a maximum value in the TBS value set when the type of the terminal device is the terminal type capable of reflecting a downlink carrier to send an uplink signal. The terminal type capable of reflecting a downlink carrier to send an uplink signal may also be described as a terminal type having a backscattering capability or a terminal type having no capability of actively generating an uplink carrier. This is not limited in the present invention. The terminal type capable of actively generating an uplink carrier may also be described as a terminal type capable of actively generating an uplink carrier but having a maximum carrier frequency tolerance greater than 0.1 ppm, for example, a terminal type having a maximum carrier frequency tolerance that may be 1 ppm, 5 ppm, 10 ppm, 20 ppm, or 50 ppm. This is not limited in the present invention.

For example, when the type of the terminal device is the terminal type capable of actively generating an uplink carrier, the TBS value set may be {32, 64, 96, 128, ..., 800, 832, 864, 896}, and in this case, the maximum value in the TBS value set is 896. When the type of the terminal device is the terminal type capable of reflecting a downlink carrier to send an uplink signal, the TBS value set may be {8, 16, 24, 32, ..., 104, 112, 120, 128}, and in this case, the maximum value in the TBS value set is 128.

In a third example, when the fifth information includes the capability level of the terminal device and the type of the terminal device, a higher capability level indicates a larger maximum value in the TBS value set, and a maximum value in the TBS value set when the type of the terminal device is the terminal type capable of actively generating an uplink carrier is greater than a maximum value in the TBS value set when the type of the terminal device is the terminal type capable of reflecting a downlink carrier to send an uplink signal.

For example, when the capability level includes the memory storage level and the memory storage level 1 is higher than the memory storage level 2, a maximum value in the TBS value set is a maximum value 1 when the memory storage level of the terminal device is the memory storage level 1 and the type of the terminal device is the terminal type capable of actively generating an uplink carrier; a maximum value in the TBS value set is a maximum value 2 when the memory storage level of the terminal device is the memory storage level 1 and the type of the terminal device is the terminal type capable of reflecting a downlink carrier to send an uplink signal; a maximum value in the TBS value set is a maximum value 3 when the memory storage level of the terminal device is the memory storage level 2 and the type of the terminal device is the terminal type capable of actively generating an uplink carrier; and a maximum value in the TBS value set is a maximum value 4 when the memory storage level of the terminal device is the memory storage level 2 and the type of the terminal device is the terminal type capable of reflecting a downlink carrier to send an uplink signal. The maximum value 1 is greater than the maximum value 2, the maximum value 3, and the maximum value 4. The maximum value 2 is greater than the maximum value 4. The maximum value 3 is greater than the maximum value 4.

According to this optional solution, a higher capability level indicates a larger maximum value in the TBS value set, the maximum value in the TBS value set when the type of the terminal device is the terminal type capable of actively generating an uplink carrier is greater than the maximum value in the TBS value set when the type of the terminal device is the terminal type capable of reflecting a downlink carrier to send an uplink signal, the TBS value is a value in the TBS value set, and the maximum value in the TBS value set is a value of a maximum TBS that can be transmitted by the terminal device. Therefore, when the third information indicates the maximum value in the TBS value set as the TBS value, performance of the terminal device is maximized.

When the quantity of rows of the interleaving matrix or the maximum value of the quantity of rows is associated with the fifth information, in an example, the quantity of rows of the interleaving matrix or the maximum value of the quantity of rows is positively correlated with the capability level. In other words, a higher capability level indicates a larger quantity of rows of the interleaving matrix or a larger maximum value of the quantity of rows.

For example, the capability level includes the memory storage level and the memory storage level 1 is higher than the memory storage level 2. For the memory storage level 1, the quantity of rows of the interleaving matrix may be 32; or for the memory storage level 2, the quantity of rows of the interleaving matrix may be 8. Alternatively, for the memory storage level 1, a value set of the quantity of rows of the interleaving matrix may be {2, 4, 8, ..., 24, 32}, and in this case, the maximum value of the quantity of rows of the interleaving matrix is 32; or for the memory storage level 2, a value set of the quantity of rows of the interleaving matrix may be {1, 2, 4, 8}, and in this case, the maximum value of the quantity of rows of the interleaving matrix is 8.

It should be noted that the foregoing only uses an example in which the capability level includes the memory storage level for description. Cases in which the capability level may further include the energy storage level and the power consumption level are similar to the foregoing case in which the capability level includes the memory storage level. For details, refer to related descriptions in which the capability level includes the memory storage level. Details are not described in embodiments of this application again.

In a second example, a quantity of rows of the interleaving matrix or a maximum value of the quantity of rows when the type of the terminal device is the terminal type capable of actively generating an uplink carrier is greater than a quantity of rows of the interleaving matrix or a maximum value of the quantity of rows when the type of the terminal device is the terminal type capable of reflecting a downlink carrier to send an uplink signal.

For example, when the type of the terminal device is the terminal type capable of actively generating an uplink carrier, the quantity of rows of the interleaving matrix may be 32. When the type of the terminal device is the terminal type capable of reflecting a downlink carrier to send an uplink signal, the quantity of rows of the interleaving matrix may be 8. Alternatively, when the type of the terminal device is the terminal type capable of actively generating an uplink carrier, a value set of the quantity of rows of the interleaving matrix may be {2, 4, 8, ..., 24, 32}, and in this case, the maximum value of the quantity of rows of the interleaving matrix is 32. When the type of the terminal device is the terminal type capable of reflecting a downlink carrier to send an uplink signal, a value set of the quantity of rows of the interleaving matrix may be {1, 2, 4, 8}, and in this case, the maximum value of the quantity of rows of the interleaving matrix is 8.

In a third example, when the fifth information includes the capability level of the terminal device and the type of the terminal device, a higher capability level indicates a larger quantity of rows of the interleaving matrix or a larger maximum value of the quantity of rows, and a quantity of rows of the interleaving matrix or a maximum value of the quantity of rows when the type of the terminal device is the terminal type capable of actively generating an uplink carrier is greater than a quantity of rows of the interleaving matrix or a maximum value of the quantity of rows when the type of the terminal device is the terminal type capable of reflecting a downlink carrier to send an uplink signal.

For example, when the capability level includes the memory storage level and the memory storage level 1 is higher than the memory storage level 2, a quantity of rows of the interleaving matrix or a maximum value of the quantity of rows is a quantity of rows or a maximum value 1 of the quantity of rows when the memory storage level of the terminal device is the memory storage level 1 and the type of the terminal device is the terminal type capable of actively generating an uplink carrier; a quantity of rows of the interleaving matrix or a maximum value of the quantity of rows is a quantity of rows or a maximum value 2 of the quantity of rows when the memory storage level of the terminal device is the memory storage level 1 and the type of the terminal device is the terminal type capable of reflecting a downlink carrier to send an uplink signal; a quantity of rows of the interleaving matrix or a maximum value of the quantity of rows is a quantity of rows or a maximum value 3 of the quantity of rows when the memory storage level of the terminal device is the memory storage level 2 and the type of the terminal device is the terminal type capable of actively generating an uplink carrier; and a quantity of rows of the interleaving matrix or a maximum value of the quantity of rows is a quantity of rows or a maximum value 4 of the quantity of rows when the memory storage level of the terminal device is the memory storage level 2 and the type of the terminal device is the terminal type capable of reflecting a downlink carrier to send an uplink signal. The quantity of rows or the maximum value 1 of the quantity of rows is greater than the quantity of rows or the maximum value 2 of the quantity of rows, the quantity of rows or the maximum value 3 of the quantity of rows, and the quantity of rows or the maximum value 4 of the quantity of rows. The quantity of rows or the maximum value 2 of the quantity of rows is greater than the quantity of rows or the maximum value 4 of the quantity of rows. The quantity of rows or the maximum value 3 of the quantity of rows is greater than the quantity of rows or the maximum value 4 of the quantity of rows.

According to this optional solution, a higher capability level indicates a larger quantity of rows of the interleaving matrix or a larger maximum value of the quantity of rows, and the quantity of rows of the interleaving matrix or the maximum value of the quantity of rows when the type of the terminal device is the terminal type capable of actively generating an uplink carrier is greater than the quantity of rows of the interleaving matrix or the maximum value of the quantity of rows when the type of the terminal device is the terminal type capable of reflecting a downlink carrier to send an uplink signal. In other words, a higher reporting capability of the terminal device indicates a larger quantity of rows of the interleaving matrix or a larger maximum value of the quantity of rows configured by the network device for the terminal device. Therefore, a larger interleaving distance of the third bit sequence (that is, a lower temporal correlation between adjacent bits in channel transmission) leads to better data transmission performance.

It should be noted that the foregoing merely uses examples to describe a process in which the network device determines the maximum value in the TBS value set based on the fifth information and a process in which the network device determines the quantity of rows of the interleaving matrix or the maximum value of the quantity of rows based on the fifth information, and it does not indicate that the maximum value in the TBS value set and the quantity of rows of the interleaving matrix or the maximum value of the quantity of rows determined based on the fifth information in this embodiment of this application include only the foregoing examples. Actually, in this embodiment of this application, there are other cases for the maximum value in the TBS value set and the quantity of rows of the interleaving matrix or the maximum value of the quantity of rows determined based on the fifth information. This is not limited in embodiments of this application.

The foregoing only uses a communication procedure for an encoded bit sequence (namely, any third bit sequence) output by an encoder as an example for description. For each of a plurality of encoded bit sequences output by the encoder, corresponding operations may be performed with reference to the communication procedure in any one of FIG. 8 to FIG. 10. Details are not described in embodiments of this application again.

It can be understood that in the foregoing embodiments, the methods and/or steps implemented by the network device may be alternatively implemented by a component (for example, a processor, a chip, a chip system, a circuit, a logical module, or software like a chip or a circuit) that may be used in the network device, and the methods and/or steps implemented by the terminal device may be alternatively implemented by a component (for example, a processor, a chip, a chip system, a circuit, a logical module, or software like a chip or a circuit) that may be used in the terminal device.

The foregoing mainly describes the solutions provided in this application. Correspondingly, this application further provides a communication apparatus. The communication apparatus is configured to implement the foregoing methods. The communication apparatus may be the terminal device in the foregoing method embodiments, an apparatus including the terminal device, or a component that may be used in the terminal device, for example, a chip or a chip system. Alternatively, the communication apparatus may be the network device in the foregoing method embodiments, an apparatus including the network device, or a component that may be used in the network device, for example, a chip or a chip system.

It can be understood that, to implement the foregoing functions, the communication apparatus includes a corresponding hardware structure and/or software module for performing the functions. A person skill in the art should be easily aware that, with reference to the examples described in embodiments disclosed in this specification, units and algorithm steps can be implemented by hardware or a combination of hardware and computer software in this application. Whether a function is performed by hardware or computer software driving hardware depends on particular applications and design constraints of the technical solutions. A person skilled in the art may use a different method to implement the described functions for each particular application, but it should not be considered that the implementation goes beyond the scope of this application.

In embodiments of this application, functional modules of the communication apparatus may be obtained through division based on the foregoing method embodiments. For example, functional modules may be obtained through division in correspondence to functions, or at least two functions may be integrated into one processing module. The integrated module may be implemented in a form of hardware, or may be implemented in a form of a software functional module. It should be noted that division into modules in embodiments of this application is an example, is merely logical function division, and may be other division during actual implementation.

FIG. 12 is a diagram of a structure of a communication apparatus 120. The communication apparatus 120 includes a processing module 1201 and a transceiver module 1202. The communication apparatus 120 may be configured to implement functions of the foregoing network device or terminal device.

In some embodiments, the communication apparatus 120 may further include a storage module (not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver device, a transceiver, or a communication interface.

In some embodiments, the transceiver module 1202 may include a receiving module and a sending module, respectively configured to perform receiving and sending steps performed by the network device or the terminal device in the foregoing method embodiments, and/or configured to support other processes of the technologies described in this specification. The processing module 1201 may be configured to perform processing (for example, determining or generation) steps performed by the network device or the terminal device in the foregoing method embodiments, and/or configured to support other processes of the technologies described in this specification.

When the communication apparatus 120 is configured to implement the functions of the terminal device, specific content is as follows.

In some embodiments, the transceiver module 1202 is configured to receive first information, where the first information indicates the terminal device to send an uplink signal, and an input bit sequence of the uplink signal is a first bit sequence; and the transceiver module 1202 is further configured to output a prestored second bit sequence, where the second bit sequence is obtained by arranging, in a predefined order, a bit sequence obtained through channel encoding performed on the first bit sequence.

In some other embodiments, the transceiver module 1202 is configured to receive first information, where the first information indicates the terminal device to send an uplink signal, and an input bit sequence of the uplink signal is a first bit sequence; and the transceiver module 1202 is further configured to output a prestored third bit sequence in a predefined order, where the third bit sequence is obtained by performing channel encoding on the first bit sequence.

With reference to the foregoing two embodiments, optionally, the transceiver module 1202 is further configured to receive second information, where the second information indicates or configures a quantity of rows of an interleaving matrix and/or a quantity of columns of the interleaving matrix.

In still some embodiments, the transceiver module 1202 is configured to receive third information, where the third information indicates or configures transport block size TBS value, and the TBS value is equal to a product of a quantity of rows of an interleaving matrix and a quantity of columns of the interleaving matrix; the processing module 1201 is configured to determine a third bit sequence, where the third bit sequence is obtained by performing channel encoding on an input bit sequence of an uplink signal, and a quantity of bits in the third bit sequence is equal to the TBS value; and the transceiver module 1202 is further configured to output an interleaved third bit sequence.

Optionally, the transceiver module 1202 is further configured to receive second information, where the second information indicates or configures the quantity of rows of the interleaving matrix and/or the quantity of columns of the interleaving matrix.

Optionally, the transceiver module 1202 is further configured to receive fourth information, where the fourth information indicates or configures a TBS value set, and values in the TBS value set include the TBS value.

Optionally, the transceiver module 1202 is further configured to send fifth information, where the fifth information is associated with a maximum value in the TBS value set, the fifth information includes a type of the terminal device and/or a capability level of the terminal device, the type of the terminal device includes at least one of a terminal type capable of actively generating an uplink carrier and a terminal type capable of reflecting a downlink carrier to send an uplink signal, and the capability level of the terminal device includes at least one of a memory storage level, an energy storage level, and a power consumption level.

When the communication apparatus 120 is configured to implement the functions of the network device, specific content is as follows.

In some embodiments, the processing module 1201 determines third information, where the third information indicates or configures a transport block size TBS value, and the TBS value is equal to a product of a quantity of rows of an interleaving matrix and a quantity of columns of the interleaving matrix; and the transceiver module 1202 is configured to send the third information.

Optionally, the transceiver module 1202 is further configured to send second information, where the second information indicates the quantity of rows of the interleaving matrix and/or the quantity of columns of the interleaving matrix.

Optionally, the processing module 1201 is further configured to: determine a TBS value set, where the TBS value set is an integer multiple of the quantity of rows of the interleaving matrix or an integer multiple of the quantity of columns of the interleaving matrix; and determine the third information from fourth information.

Optionally, the transceiver module 1202 is further configured to send fourth information, where the fourth information indicates the TBS value set.

Optionally, the transceiver module 1202 is further configured to receive fifth information, where the fifth information is associated with a maximum value in the TBS value set, the fifth information includes a type of a terminal device and/or a capability level of the terminal device, the type of the terminal device includes at least one of a terminal type capable of actively generating an uplink carrier and a terminal type capable of reflecting a downlink carrier to send an uplink signal, and the capability level of the terminal device includes at least one of a memory storage level, an energy storage level, and a power consumption level.

All related content of the steps in the foregoing method embodiments may be cited in function descriptions of the corresponding functional modules. Details are not described herein again.

In this application, the communication apparatus 120 may be presented with the functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, when the communication apparatus 120 in FIG. 12 is a chip or a chip system, the functions/implementation processes of the transceiver module 1202 may be implemented by an input/output interface (or a communication interface) of the chip or the chip system, and the functions/implementation processes of the processing module 1201 may be implemented by a processor (or a processing circuit) of the chip or the chip system.

The communication apparatus 120 provided in this embodiment may perform the foregoing method. Therefore, for technical effects that can be achieved by the communication apparatus 120, refer to the foregoing method embodiments. Details are not described herein again.

In a possible product form, the network device or the terminal device in embodiments of this application may be alternatively implemented by using the following: one or more field programmable gate arrays (field programmable gate arrays, FPGAs), a programmable logic device (programmable logic device, PLD), a controller, a state machine, a logic gate, a discrete hardware component, any other suitable circuit, or any combination of circuits that can perform various functions described throughout this application.

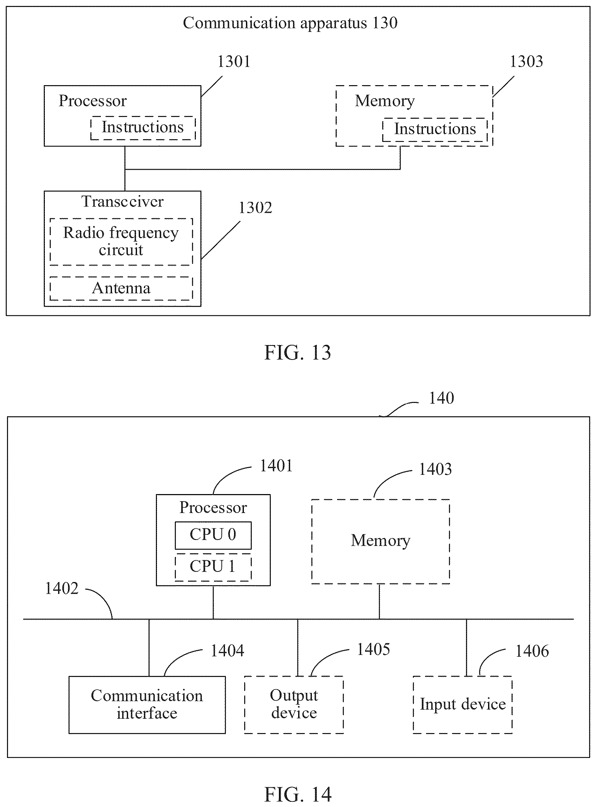

In another possible product form, the network device or the terminal device in embodiments of this application may be implemented by using a general bus architecture. For ease of description, refer to FIG. 13. FIG. 13 is a diagram of a structure of a communication apparatus 130 according to an embodiment of this application. The communication apparatus 130 includes a processor 1301 and a transceiver 1302. The communication apparatus 130 may be a terminal device, or a chip or a chip system in the terminal device; or the communication apparatus 130 may be a network device, or a chip or a module in the network device. FIG. 13 shows only main components of the communication apparatus 130. In addition to the processor 1301 and the transceiver 1302, the communication apparatus may further include a memory 1303 and an input/output apparatus (not shown in FIG. 13).

Optionally, the processor 1301 is mainly configured to: process a communication protocol and communication data, control the entire communication apparatus, execute a software program, and process data of the software program. The memory 1303 is mainly configured to store the software program and the data. The transceiver 1302 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of electromagnetic waves. The input/output apparatus, like a touchscreen, a display, or a keyboard, is mainly configured to receive data input by a user and output data to the user.

Optionally, the processor 1301, the transceiver 1302, and the memory 1303 may be connected through a communication bus.

After the communication apparatus is powered on, the processor 1301 may read the software program from the memory 1303, interpret and execute instructions of the software program, and process the data of the software program. When data needs to be sent wirelessly, the processor 1301 performs baseband processing on the to-be-sent data, and then outputs a baseband signal to the radio frequency circuit. The radio frequency circuit performs radio frequency processing on the baseband signal, and then sends out a radio frequency signal in a form of an electromagnetic wave through the antenna. When data is sent to the communication apparatus, the radio frequency circuit receives a radio frequency signal through the antenna, converts the radio frequency signal into a baseband signal, and outputs the baseband signal to the processor 1301. The processor 1301 converts the baseband signal into data and processes the data.

In another implementation, the radio frequency circuit and the antenna may be disposed independently of the processor that performs baseband processing. For example, in a distributed scenario, the radio frequency circuit and the antenna may be remotely disposed independent of the communication apparatus.

In some embodiments, in terms of hardware implementation, a person skilled in the art can figure out that the communication apparatus 120 may be in a form of the communication apparatus 130 shown in FIG. 13.

In an example, the functions/implementation processes of the processing module 1201 in FIG. 12 may be implemented by the processor 1301 in the communication apparatus 130 shown in FIG. 13 by invoking computer executable instructions stored in the memory 1303. The functions/implementation processes of the transceiver module 1202 in FIG. 12 may be implemented by the transceiver 1302 in the communication apparatus 130 shown in FIG. 13.

In still another possible product form, the network device or the terminal device in this application may use a composition structure shown in FIG. 14, or include components shown in FIG. 14. FIG. 14 is a diagram of composition of a communication apparatus 140 according to this application. The communication apparatus 140 may be a terminal device, or a chip or a system-on-a-chip in the terminal device; or may be a network device, or a module, a chip, or a system-on-a-chip in the network device.

As shown in FIG. 14, the communication apparatus 140 includes at least one processor 1401 and at least one communication interface (in FIG. 14, an example in which one communication interface 1404 and one processor 1401 are included is used only for description). Optionally, the communication apparatus 140 may further include a communication bus 1402 and a memory 1403.

The processor 1401 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. The processor 1401 may be alternatively another apparatus having a processing function, for example, a circuit, a component, or a software module. This is not limited.

The communication bus 1402 is configured to connect different components of the communication apparatus 140, to enable communication between different components. The communication bus 1402 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, the bus is represented by using only one bold line in FIG. 14, but this does not mean that there is only one bus or one type of bus.

The communication interface 1404 is configured to communicate with another device or a communication network. For example, the communication interface 1404 may be a module, a circuit, a transceiver, or any apparatus that can implement communication. Optionally, the communication interface 1404 may be an input/output interface located in the processor 1401, and is configured to implement signal input and signal output of the processor.

The memory 1403 may be an apparatus with a storage function, and is configured to store instructions and/or data. The instructions may be computer programs.

For example, the memory 1403 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, or the like), a magnetic disk storage medium, or another magnetic storage device. This is not limited.

It should be noted that the memory 1403 may be independent of the processor 1401, or may be integrated with the processor 1401. The memory 1403 may be located inside the communication apparatus 140, or may be located outside the communication apparatus 140. This is not limited. The processor 1401 may be configured to execute the instructions stored in the memory 1403, to implement the methods provided in the following embodiments of this application.

In an optional implementation, the communication apparatus 140 may further include an output device 1405 and an input device 1406. The output device 1405 communicates with the processor 1401, and may display information in a plurality of manners. For example, the output device 1405 may be a liquid crystal display (liquid crystal display, LCD), a light-emitting diode (light-emitting diode, LED) display device, a cathode ray tube (cathode ray tube, CRT) display device, a projector (projector), or the like. The input device 1406 communicates with the processor 1401, and may receive a user input in a plurality of manners. For example, the input device 1406 may be a mouse, a keyboard, a touchscreen device, a sensing device, or the like.

In some embodiments, in terms of hardware implementation, a person skilled in the art can figure out that the communication apparatus 120 may be in a form of the communication apparatus 140 shown in FIG. 14.

In an example, the functions/implementation processes of the processing module 1201 in FIG. 12 may be implemented by the processor 1401 in the communication apparatus 140 shown in FIG. 14 by invoking computer executable instructions stored in the memory 1403. The functions/implementation processes of the transceiver module 1202 in FIG. 12 may be implemented by the communication interface 1404 in the communication apparatus 140 shown in FIG. 14.

It should be noted that the structure shown in FIG. 14 does not constitute specific limitations on the network device or the terminal device. For example, in some other embodiments of this application, the network device or the terminal device may include more or fewer components than those shown in the figure, a combination of some components, splitting of some components, or a different arrangement of the components. The components shown in the figure may be implemented by hardware, software, or a combination of software and hardware.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the memory may alternatively not be in the communication apparatus.

In another possible implementation, the communication apparatus further includes an interface circuit. The interface circuit is a code/data read-write interface circuit, and the interface circuit is configured to receive computer executable instructions (the computer executable instructions are stored in a memory, and may be directly read from the memory or may be read via another component) and transmit the computer executable instructions to the processor.

In still another possible implementation, the communication apparatus further includes a communication interface, and the communication interface is configured to communicate with a module outside the communication apparatus.

It can be understood that the communication apparatus may be a chip or a chip system. When the communication apparatus is a chip system, the communication apparatus may include a chip, or may include a chip and another discrete device. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions in any one of the foregoing method embodiments are implemented.

A person of ordinary skill in the art can understand that, for the purpose of convenient and brief description, for detailed working processes of the system, apparatuses, and units described above, refer to corresponding processes in the method embodiments. Details are not described herein again.

It can be understood that the system, apparatuses, and methods described in this application may be alternatively implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may be physically or not physically separated. To be specific, the units may be located at a same place or distributed on a plurality of network units. Parts displayed as units may be or may not be physical units. Some or all of the units may be selected depending on an actual requirement to achieve the objectives of the solutions of embodiments.

In addition, functional units in embodiments of this application may be integrated into one processing unit, each of the units may exist alone physically, or at least two units may be integrated into one unit.

All or some of the foregoing embodiments may be implemented by using software, hardware, firmware, or any combination thereof. When a software program is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. In embodiments of this application, the computer may include the foregoing apparatuses.

Although this application is described herein with reference to embodiments, in a process of implementing this application that claims protection, a person skilled in the art can understand and implement other variations of the disclosed embodiments by viewing the accompanying drawings, the disclosed content, and the appended claims. In the claims, the term "comprising" (comprising) does not exclude other components or steps, and "a" or "an" does not exclude "a plurality of". A single processor or another unit can implement several functions enumerated in the claims. Some measures are recorded in dependent claims different from each other, but this does not mean that these measures cannot be combined to produce great effect.

Although this application is described with reference to specific features and embodiments thereof, it is clear that various modifications and combinations may be made without departing from the scope of this application. Correspondingly, the specification and the accompanying drawings are merely example descriptions of this application defined by the appended claims, and are considered to cover any of and all modifications, variations, combinations, or equivalents within the scope of this application. It is clear that a person skilled in the art can make various modifications and variations to this application without departing from the scope of this application. In this way, this application is intended to cover these modifications and variations of this application provided that they fall within the scope defined by the following claims and equivalent technologies of this application.

**Claims**

1. A communication method, wherein the method is applied to a terminal device, and the method comprises:

   receiving first information, wherein the first information indicates the terminal device to send an uplink signal, and an input bit sequence of the uplink signal is a first bit sequence; and
   outputting a prestored second bit sequence, wherein the second bit sequence is obtained by arranging, in a predefined order, a bit sequence obtained through channel encoding performed on the first bit sequence.

2. The method according to claim 1, wherein the predefined order comprises an output order of an interleaving matrix when the encoded bit sequence is input into the interleaving matrix.

3. The method according to claim 2, wherein a quantity of bits in the encoded bit sequence is equal to a product of a quantity of rows of the interleaving matrix and a quantity of columns of the interleaving matrix.

4. The method according to claim 3, wherein before the outputting the prestored second bit sequence, the method further comprises:
   receiving second information, wherein the second information indicates the quantity of rows of the interleaving matrix and/or the quantity of columns of the interleaving matrix.

5. A communication method, wherein the method is applied to a terminal device, and the method comprises:

   receiving first information, wherein the first information indicates the terminal device to send an uplink signal, and an input bit sequence of the uplink signal is a first bit sequence; and
   outputting a prestored third bit sequence in a predefined order, wherein the third bit sequence is obtained by performing channel encoding on the first bit sequence.

6. The method according to claim 5, wherein the predefined order comprises an output order of an interleaving matrix when the third bit sequence is input into the interleaving matrix.

7. The method according to claim 6, wherein a quantity of bits in the third bit sequence is equal to a product of a quantity of rows of the interleaving matrix and a quantity of columns of the interleaving matrix.

8. The method according to any one of claims 5 to 7, wherein before the outputting the prestored third bit sequence in the predefined order, the method further comprises:
receiving second information, wherein the second information indicates the quantity of rows of the interleaving matrix and/or the quantity of columns of the interleaving matrix.

9. A communication method, wherein the method is applied to a terminal device, and the method comprises:

receiving third information, wherein the third information indicates a transport block size TBS value, and the TBS value is equal to a product of a quantity of rows of an interleaving matrix and a quantity of columns of the interleaving matrix;
determining a third bit sequence, wherein the third bit sequence is obtained by performing channel encoding on an input bit sequence of the uplink signal, and a quantity of bits in the third bit sequence is equal to the TBS value; and
outputting the interleaved third bit sequence.

10. The method according to claim 9, wherein before the receiving the third information, the method further comprises:
receiving second information, wherein the second information indicates the quantity of rows of the interleaving matrix and/or the quantity of columns of the interleaving matrix.

11. The method according to claim 10, wherein before the receiving the third information, the method further comprises:
receiving fourth information, wherein the fourth information indicates a TBS value set, and values in the TBS value set comprise the TBS value.

12. The method according to claim 11, wherein when the second information indicates the quantity of rows of the interleaving matrix or the quantity of columns of the interleaving matrix, each value in the TBS value set is an integer multiple of the quantity of rows of the interleaving matrix, or each value in the TBS value set is an integer multiple of the quantity of columns of the interleaving matrix.

13. The method according to claim 11 or 12, wherein before the receiving the fourth information, the method further comprises:
sending fifth information, wherein the fifth information is associated with a maximum value in the TBS value set, the fifth information comprises a type of the terminal device and/or a capability level of the terminal device, the type of the terminal device comprises at least one of a terminal type capable of actively generating an uplink carrier and a terminal type capable of reflecting a downlink carrier to send an uplink signal, and the capability level of the terminal device comprises at least one of a memory storage level, an energy storage level, and a power consumption level.

14. A communication method, wherein the method is applied to a network device, and the method comprises:

determining third information, wherein the third information indicates a transport block size TBS value, and the TBS value is equal to a product of a quantity of rows of the interleaving matrix and a quantity of columns of the interleaving matrix; and
sending the third information.

15. The method according to claim 14, wherein the method further comprises:
sending second information, wherein the second information indicates the quantity of rows of the interleaving matrix and/or the quantity of columns of the interleaving matrix.

16. The method according to claim 14 or 15, wherein the method further comprises:

determining a TBS value set, wherein the TBS value set is an integer multiple of the quantity of rows of the interleaving matrix or an integer multiple of the quantity of columns of the interleaving matrix; and determining the TBS value from the TBS value set.

17. The method according to claim 16, wherein the method further comprises:
sending fourth information, wherein the fourth information indicates the TBS value set.

18. The method according to claim 16 or 17, wherein the method further comprises:
receiving fifth information, wherein the fifth information is associated with a maximum value in the TBS value set, the fifth information comprises a type of a terminal device and/or a capability level of the terminal device, the type of the terminal device comprises at least one of a terminal type capable of actively generating an uplink carrier and a terminal type capable of reflecting a downlink carrier to send an uplink signal, and the capability level of the terminal device comprises at least one of a memory storage level, an energy storage level, and a power consumption level.

19. The method according to claim 18, wherein the maximum value in the TBS value set is positively correlated with the capability level.

20. The method according to claim 18 or 19, wherein a maximum value in the TBS value set when the type of the terminal device is the terminal type capable of actively generating an uplink carrier is greater than a maximum value in the TBS value set when the type of the terminal device is the terminal type capable of reflecting a downlink carrier to send an uplink signal.

21. A communication apparatus, wherein the communication apparatus comprises a transceiver module and a processing module;

the transceiver module is configured to perform a receiving behavior or a sending behavior in the method according to any one of claims 1 to 4, the transceiver module is configured to perform a receiving behavior or a sending behavior in the method according to any one of claims 5 to 8, the transceiver module is configured to perform a receiving behavior or a sending behavior in the method according to any one of claims 9 to 13, or the transceiver module is configured to perform a receiving behavior or a sending behavior in the method according to any one of claims 14 to 20; and
the processing module is configured to perform a processing behavior in the method according to any one of claims 1 to 4, the transceiver module is configured to perform a processing behavior in the method according to any one of claims 5 to 8, the processing module is configured to perform a processing behavior in the method according to any one of claims 9 to 13, or the transceiver module is configured to perform a processing behavior in the method according to any one of claims 14 to 20.

22. A communication apparatus, wherein the communication apparatus comprises a processor, and the processor is configured to run a computer program or instructions, so that the communication apparatus performs the method according to any one of claims 1 to 4, the communication apparatus performs the method according to any one of claims 5 to 8, the communication apparatus performs the method according to any one of claims 9 to 13, or the communication apparatus performs the method according to any one of claims 14 to 20.

23. A computer-readable storage medium, wherein the computer-readable storage medium stores computer instructions or a program, and when the computer instructions or the program is run on a computer, the method according to any one of claims 1 to 4 is performed, the method according to any one of claims 5 to 8 is performed, the method according to any one of claims 9 to 13 is performed, or the method according to any one of claims 14 to 20 is performed.

24. A computer program product, wherein when the computer program product runs on a communication apparatus, the communication apparatus is enabled to perform the method according to any one of claims 1 to 4, the communication apparatus is enabled to perform the method according to any one of claims 5 to 8, the communication apparatus is enabled to perform the method according to any one of claims 9 to 13, or the communication apparatus is enabled to perform the method according to any one of claims 13 to 20.

25. A chip, comprising a processor, wherein the processor is coupled to a memory, the memory is configured to store a program or instructions, and when the program or instructions are executed by the processor, the chip is enabled to perform the method according to any one of claims 1 to 4, the chip is enabled to perform the method according to any one of claims 5 to 8, the chip is enabled to perform the method according to any one of claims 9 to 13, or the chip is enabled to perform the method according to any one of claims 14 to 20.

FIG. 1

| 0 | 1 | 2 | 3 | ... | C–2 | C–1 |
|---|---|---|---|---|---|---|
| C | C+1 | C+2 | C+3 | ... | 2C–2 | 2C–1 |
| 2C | 2C+1 | 2C+2 | 2C+3 | ... | 3C–2 | 3C–1 |
| ... | ... | ... | ... | ... ... | ... | ... |
| (R–1)*C | (R–1)*C+1 | (R–1)*C+2 | (R–1)*C+3 | ... | R*C–2 | R*C–1 |

FIG. 2

FIG. 3

| 0 | C–2 | C–1 | 3 | ... | 1 | 2 |
|---|---|---|---|---|---|---|
| C | 2C–2 | 2C–1 | C+3 | ... | C+1 | C+2 |
| 2C | 3C–2 | 3C–1 | 2C+3 | ... | 2C+1 | 2C+2 |
| ... | ... | ... | ... | ...<br>... | ... | ... |
| (R–1)*C | R*C–2 | R*C–1 | (R–1)*C+3 | ... | (R–1)*C+1 | (R–1)*C+2 |

FIG. 4

Column permutation

(a)    (b)

Column permutation    (c)

(d)

FIG. 5

Interleave each encoded bit sequence output by an encoder, to obtain an interleaved sequence corresponding to each encoded bit sequence

S601

Store a first sequence, where the first sequence includes the interleaved sequence corresponding to each encoded bit sequence

S602

Delete a padding encoded bit in the first sequence, to obtain a rate matching result

S603

FIG. 6

Base station ⟷ Tag

(a)

UE ⟷ Tag

(b)

FIG. 7

| Terminal device | | Network device |
|---|---|---|

S801: First information, where the first information indicates the terminal device to send an uplink signal, and an input bit sequence of the uplink signal is a first bit sequence

S802: Prestored second bit sequence, where the second bit sequence is obtained by arranging, in a predefined order, a bit sequence obtained through channel encoding performed on the first bit sequence

FIG. 8

| Terminal device | | Network device |
|---|---|---|

S901: First information, where the first information indicates the terminal device to send an uplink signal, and an input bit sequence of the uplink signal is a first bit sequence

S902: Send a prestored third bit sequence in a predefined order, where the third bit sequence is obtained by performing channel encoding on the first bit sequence

FIG. 9

| Terminal device | | Network device |
|---|---|---|

S1001: Third information, where the third information indicates a TBS value, and the TBS value is equal to an integer multiple of a quantity of rows of an interleaving matrix and/or an integer multiple of a quantity of columns of the interleaving matrix

S1002: Determine a third bit sequence, where the third bit sequence is obtained by performing channel encoding on an input bit sequence of an uplink signal, and a quantity of bits in the third bit sequence is equal to the TBS value

S1003: Interleaved third bit sequence

FIG. 10

Terminal device | Network device

S1006: Fifth information, where the fifth information is associated with a maximum value in a TBS value set

S1005: Fourth information, where the fourth information indicates the TBS value set

S1001: Third information, where the third information indicates a transport block size TBS value

S1002: Determine a third bit sequence

S1004: Second information, where the second information indicates a quantity of rows of an interleaving matrix and/or a quantity of columns of the interleaving matrix

S1003: Interleaved third bit sequence

FIG. 11

Communication apparatus 120

Processing module 1201

Transceiver module 1202

FIG. 12

Communication apparatus 130

Processor 1301

Instructions

Memory 1303

Instructions

Transceiver 1302

Radio frequency circuit

Antenna

FIG. 13

140

Processor 1401

CPU 0

CPU 1

Memory 1403

1402

Communication interface 1404

Output device 1405

Input device 1406

FIG. 14

## INTERNATIONAL SEARCH REPORT

| International application No. |
| --- |
| **PCT/CN2024/102616** |

### A. CLASSIFICATION OF SUBJECT MATTER

H04L1/00(2006.01)i; H04L5/00(2006.01)i

According to International Patent Classification (IPC) or to both national classification and IPC

### B. FIELDS SEARCHED

Minimum documentation searched (classification system followed by classification symbols)

IPC: H04L1/-, H04L5/-

Documentation searched other than minimum documentation to the extent that such documents are included in the fields searched

Electronic data base consulted during the international search (name of data base and, where practicable, search terms used)

CNTXT, CNABS, CNKI: TBS, 交织, 行, 列, 信道编码, 乘积; VEN, USTXT, WOTXT, EPTXT, 3GPP: TBS, interleave, row, column, product, channel coding

### C. DOCUMENTS CONSIDERED TO BE RELEVANT

| Category* | Citation of document, with indication, where appropriate, of the relevant passages | Relevant to claim No. |
| --- | --- | --- |
| X | CN 108632003 A (HUAWEI TECHNOLOGIES CO., LTD.) 09 October 2018 (2018-10-09) description, paragraphs [0005]-[0006] | 1-8, 21-25 |
| Y | CN 108632003 A (HUAWEI TECHNOLOGIES CO., LTD.) 09 October 2018 (2018-10-09) description, paragraphs [0005]-[0006] | 9-13 |
| X | US 2021044384 A1 (QUALCOMM INC.) 11 February 2021 (2021-02-11) claim 4, and description, paragraphs [0009] and [0086] | 14-25 |
| Y | US 2021044384 A1 (QUALCOMM INC.) 11 February 2021 (2021-02-11) claim 4, and description, paragraphs [0009] and [0086] | 9-13 |
| A | CN 115913252 A (HUAWEI TECHNOLOGIES CO., LTD.) 04 April 2023 (2023-04-04) entire document | 1-25 |

☐ Further documents are listed in the continuation of Box C.　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **20 August 2024** | **21 August 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/102616**

| Patent document cited in search report | | | Publication date (day/month/year) | Patent family member(s) | | | Publication date (day/month/year) |
|---|---|---|---|---|---|---|---|
| CN | 108632003 | A | 09 October 2018 | EP | 3591867 | A1 | 08 January 2020 |
| | | | | EP | 3591867 | A4 | 26 February 2020 |
| | | | | EP | 3591867 | B1 | 10 November 2021 |
| | | | | US | 2020021389 | A1 | 16 January 2020 |
| | | | | US | 11088778 | B2 | 10 August 2021 |
| | | | | WO | 2018171697 | A1 | 27 September 2018 |
| | | | | CN | 108632003 | B | 23 March 2021 |
| US | 2021044384 | A1 | 11 February 2021 | US | 11777650 | B2 | 03 October 2023 |
| | | | | WO | 2021030154 | A1 | 18 February 2021 |
| CN | 115913252 | A | 04 April 2023 | WO | 2023051172 | A1 | 06 April 2023 |
| | | | | EP | 4395182 | A1 | 03 July 2024 |

Form PCT/ISA/210 (patent family annex) (July 2022)

**EP 4 723 521 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310844462